# EUROPÄISCHE PATENTSCHRIFT

(11) **EP 2 192 160 B1**
(45) Veröffentlichungstag und Bekanntmachung des Hinweises auf die Patenterteilung: **17.08.2016**
(21) Anmeldenummer: 08020842.4
(22) Anmeldetag: 01.12.2008
(51) Int. Cl.: C09B 67/02, C09B 67/08, C09B 61/00, A23L 5/43

(54) **Micellar integrierter Oxidationsschutz für natürliche Farbstoffe**
Micellar integrated oxidation protection for natural dyes
Protection contre l'oxydation intégrée micellaire pour couleurs naturelles

(43) Veröffentlichungstag der Anmeldung: 02.06.2010
(73) Patentinhaber: AQUANOVA AG, 64295 Darmstadt (DE)
(72) Erfinder: Behnam, Dariush, 64380 Rossdorf (DE)
(74) Vertreter: Tesch, Sabine

(56) Entgegenhaltungen:
- EP-A- 0 239 086
- EP-A- 0 278 284
- EP-A- 0 795 585
- EP-A- 1 903 887
- EP-A1- 0 800 825
- EP-A1- 1 016 404
- EP-A2- 0 239 086
- EP-A2- 0 848 913
- CH-A- 523 024
- DE-A1- 19 841 930
- DE-B- 1 288 713
- GB-A- 1 284 350
- GB-A- 1 295 901
- GB-A- 2 012 547
- US-A- 3 922 368
- US-A- 3 998 753
- US-A- 5 059 437
- US-A- 5 079 016
- US-A- 5 885 629

## Beschreibung

Die Erfindung betrifft ein Solubilisat, welches zumindest einen natürlichen Farbstoff enthält, welcher in Wasser nicht oder nur schwer löslich ist, sowie ein Verfahren zur Herstellung eines solchen Solubilisats.

Auch Produkte wie Lebensmittel, Kosmetika und Pharmazeutika sollen in optisch ansprechender Weise formuliert werden, um die Akzeptanz des Verwenders in positiver Weise zu beeinflussen. Zur Farbgebung stehen dafür unterschiedliche Stoffe zur Verfügung.

Mit über 2000 verschiedenen Verbindungen stellen die Azofarbstoffe die größte Gruppe der Farbstoffe dar. Azofarbstoffe zeichnen sich durch ihre besondere Lichtechtheit, Stabilität und Farbintensität, aber auch durch ihre hervorragende Wasserlöslichkeit aus. Beispielsweise besteht bei Getränken häufig die Anforderung, daß das Produkt transparent sein soll. Azofarbstoffe sind bestens zur Herstellung von klaren bzw. transparenten Getränken geeignet.

Viele Azofarbstoffe werden jedoch im menschlichen Körper durch Enzyme in ihre Ausgangsverbindungen aufgespalten, die als stark krebserzeugend gelten. Während Azofarbstoffe zu Beginn des 19. Jahrhunderts ein breites Anwendungsspektrum hatten, ist deshalb heute ihre Verwendung hauptsächlich auf die Färbung von Fetten, Holz und Papier beschränkt. Nur einige wenige sind auch zum Färben von Lebensmitteln, insbesondere für transparente Getränke, von Kosmetikartikeln und Textilien zugelassen.

Azofarbstoffe stehen aktuell unter Verdacht, Allergien und Pseudoallergien auszulösen, sowie am hyperkinetischen Syndrom (Zappelphillip) beteiligt zu sein. Daher müssen Lebensmittel mit Azofarbstoffen beispielsweise in der Europäischen Union künftig den Hinweis "kann sich nachteilig auf die Aktivität und Konzentration von Kindern auswirken" tragen.

Vor diesem Hintergrund soll die Erfindung es ermöglichen, auf den Einsatz von Azofarbstoffen verzichten zu können. Eine Möglichkeit dazu bieten natürliche Farbstoffe. Mit dem Begriff "natürliche Farbstoffe" werden hier Stoffe bezeichnet, die eine zumindest für das menschliche Auge wahrnehmbare Farbe haben und in der Natur in Pflanzen und/oder Tieren vorkommen Der Austausch der kostengünstigen Azofarbenstoffe gegen die natürlichen Farbstoffe stellt für den betroffenen Industriesektor jedoch nicht nur wirtschaftlich ein ernsthaftes Problem dar. Während Azofarbstoffe insbesondere bestens zur Herstellung von klaren bzw. transparenten Getränken geeignet sind, konnte diese unter Verwendung natürlicher Farbstoffen bisher nicht erreicht werden.

In der europäischen Patentanmeldung EP 0 800 825 A1 werden wässrige Solubilisate von Carotinoiden und Vitaminen beschrieben, welche mit nicht-ionogenen Emulgatoren hergestellt und zur parenteralen Ernährung geeignet sind.

Hydrophile Vitamine wie Vitamin C können in der wässrigen Phase enthalten sein. Zur Herstellung der Solubilisate wird Carotin mit lipophilen Vitaminen und dem Emulgator auf Temperaturen über 1200°C erhitzt. Dabei findet der Lösungsvorgang statt. Sofort anschließend wird mit einer wässrigen Lösung der hydrophilen Einsatzstoffe gemischt und dadurch abgekühlt. Dabei werden mindestens soviel lipophile Vitamine wie Carotinoid eingesetzt, wobei die Emulgatorkonzentration zwischen 1 und 40 Gew.-% liegt.

Auch die europäische Patentanmeldung EP 0 848 8 013 A2 betrifft die Verwendung von Carotinoid-Substanzen zum Färben von Lebensmitteln und pharmazeutischen Zubereitungen.

Neben der Wasserunlöslichkeit der natürlichen Farbstoffe, die den Einsatz dieser Farbstoffe beispielsweise im Bereich von klaren Getränken fast unmöglich macht, stellt insbesondere die Oxidationsfreudigkeit dieser natürlichen Stoffe für die Anwender im Allgemeinen ein großes Problem dar. Die ursprüngliche Schutzfunktion der natürlichen Farbstoffe beispielsweise in Pflanzen ist der Schutz gegen Oxidation und gegen Schäden, welche durch ultraviolettes Licht verursacht werden. Daher sind die natürlichen Farbstoffe äußerst empfindlich gegenüber Reaktionen mit Sauerstoff, zudem sind sie sehr lichtempfindlich. Es ist zwar möglich, isolierte natürliche Farbstoffe beispielsweise im Lebensmittelbereich industriell einzusetzen, jedoch verlieren diese in Folge von Oxidationsvorgängen in den jeweiligen Lebensmitteln wie in Getränken schnell ihre Farbintensität.

Daher müssen diese kostbaren Farbstoffe durch Zugabe von Antioxidationsmitteln geschützt werden. Antioxidationsmittel sind Substanzen, die Oxidationsvorgänge unterbinden oder verzögern. In der Lebensmittelchemie werden Antioxidationsmittel schon seit langem eingesetzt, um das Verderben von Nahrungsmitteln durch Oxidation zu verhindern. Beispiele für natürliche Antioxidationsmittel sind Ascorbinsäure sowie Tocopherole.

Derzeit werden Antioxidationsmittel den Konzentraten beziehungsweise Grundstoffen für natürliche Farbstoffprodukte zugegeben. Diese Konzentrate beziehungsweise Grundstoffe für natürliche Farbstoffprodukte werden dann dem Endprodukt in der Menge zugesetzt, welche für das Erreichen der gewünschten Einfärbung des Endprodukts erforderlich ist.

Nach der Zugabe von durchschnittlich nur wenigen Milligramm Farbstoff in ein Kilogramm Lebensmittel, beispielsweise ein Getränk, vergrößert sich das Volumen an Medium, in welchem der Farbstoff enthalten ist, um das bis zu 10.000-fache. Die Konzentration des ursprünglich im Farbkonzentrat befindlichen Antioxidationsmittel wird somit gleichzeitig entsprechend um bis zu 10.000-fach verdünnt. Das Antioxidationsmittel steht nun in dieser geringen Konzentration nur noch zu einem verschwindend kleinen, häufig nahezu vernachlässigbaren und unwirksamen Teil als Antioxidationsschutz für die Farbstoffe zur Verfügung. Die Folge ist, daß die Farbstoffe oxidiert werden und somit die Einfärbung des Endproduktes nachläßt.

Herkömmliche Formulierungen zum Einfärben von Lebensmitteln, Kosmetika und Pharmazeutika auf der Basis natürlicher Farbstoffe bieten den Farbstoffen deshalb lediglich einen antioxidativen Schutz, bevor die Formulierung in der Endanwendung verdünnt wird.

Der Erfindung liegt daher die Aufgabe zu Grunde, natürliche Farbstoffe, welche wasserunlöslich beziehungsweise nur schwer wasserlöslich sind, derart zu formulieren, daß der Farbstoff auch und gerade nach seiner Einarbeitung unter Verdünnung in das Endprodukt gegen Oxidation geschützt ist.

Insbesondere ist es eine Aufgabe der Erfindung, eine Formulierung für natürliche Farbstoffe zur Anwendung in Getränken auf Wasserbasis zur Verfügung zu stellen, in welchen natürliche Farbstoffe durch den im Wasser befindlichen gelösten Sauerstoff besonders oxidativ gefährdet sind, wobei die Farbstoffe Dauer der Haltbarkeit des Getränks nahezu vollständig überstehen, ohne oxidiert zu werden.

Diese Aufgaben löst die Erfindung mit einem Solubilisat, welches zumindest einen natürlichen Farbstoff, welcher in Wasser nicht oder nur schwer löslich ist, zumindest einen Emulgator mit einem HLB-Wert zwischen 8 und 19 mit einem Emulgatoranteil, welcher im Bereich von 65 Gew.-% bis 90 Gew.-%, bevorzugt im Bereich von 69 Gew.-% bis 85 Gew.-%. liegt, und zumindest ein wasserlösliches und zumindest ein fettlösliches Antioxidationsmittel enthält, wobei der Farbstoff und die Antioxidationsmittel gemeinsam in Micellen eingeschlossen vorliegen. Die Micellen bilden sich insbesondere dann aus, wenn das mit Wasser verdünnt wird, beispielsweise in einem Verhältnis von einem Gewichtsanteil Solubilisat zu 1000 Gewichtsanteilen Wasser.

Das Solubilisat gemäß der Erfindung ermöglicht somit, daß jedes Antioxidationsmittel selbst durch den Einbau in die die Micelle bildende Emulgatorhülle einerseits und durch den chemischen Oxidationsschutz, welcher durch das jeweils andere Antioxidationsmittel bereitgestellt wird, vor Oxidation geschützt wird und somit im wesentlichen vollständig und ausschließlich zum Schutz des Farbstoffs zur Verfügung steht. Die Erfindung stellt somit eine Co-Solubilisierung von Farbstoff und Antioxidantien zur Verfügung. Zudem steht dem Farbstoff selbst in Form der die Micelle bildende Emulgatorhülle eine Diffusionsbarriere gegen Sauerstoff und gegebenenfalls andere Oxidationsmittel zur Verfügung, welche insbesondere in der Endanwendung des Farbstoffsolubilisats in der Umgebung der Micelle vorliegen. Dadurch steht dem zu schützenden Farbstoff bis zum Mindesthaltbarkeitsdatum des betreffenden Endproduktes ein optimaler antioxidativer Schutz zur Verfügung.

Die Antioxidationsmittel werden durch die Erfindung also nicht in freier Lösung oder gelöst in einer Phase einer Emulsion, sondern innerhalb einer Micelle bereitgestellt, so daß sie ohne einen Konzentrationsverlust auch beim Einarbeiten des Solubilisats unter Verdünnung gemeinsam mit in der Micelle befindlichen Farbstoffen höchst effizient vor Oxidation geschützt werden.

Gundsätzlich können im Rahmen der Erfindung hydrophile und lipophile Antioxidationsmittel eingesetzt werden. Das wasserlösliche Antioxidationsmittel kann im Rahmen einer besonders einfachen Handhabung in einer gerade ausreichenden Menge an Wasser gelöst und dann zu dem Solubilisat weiter verarbeitet werden. Eine andere Möglichkeit ist, das wasserlösliche Antioxidationsmittel in dem zumindest teilweise hydrophilen Emulgator zu lösen und dann zu dem Solubilisat weiter zu verarbeiten. Der nicht in Wasser, sondern nur in lipophilen Lösungsmitteln gut lösliche Farbstoff befindet sich gemäß der Erfindung bei Verwendung eines wasser- und eines fettlöslichen Antioxidationsmittels entgegen der fachlichen Erfahrung eines Chemiefachmanns, innerhalb einer Micelle neben einem wasserlöslichen Antioxidationsmittel und kann dadurch in bisher unbekannter Weise höchst effizient vor Oxidation geschützt werden.

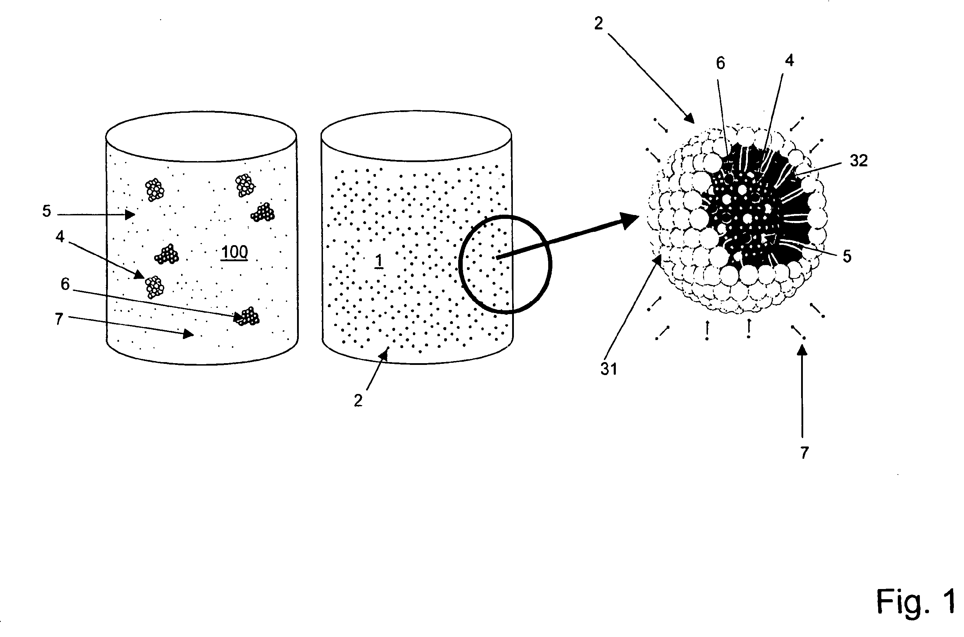

Wie unten anhand der beigfügten Figur 1 noch im Detail erläutert wird, weist die Micelle infolge der Anordnung der Emulgatormoleküle definierte Bereiche auf, die aus lipophilen beziehungsweise hydrophilen Molekülabschnitten der Emulgatormoleküle gebildet werden. Gleichzeitig hat die Micelle lediglich eine Größe im Bereich von wenigen Molekülabmessungen. Gemäß einer Modellvorstellung liegen im Rahmen der Erfindung die Farbstoffmoleküle und die Moleküle der Antioxidationsmittel in diesen Bereichen der Micelle in vorteilhafter Weise molekular dispergiert, jedoch auf kleinstem Raum permanent in der Nähe voneinander vor.

Da die Micelle gemäß der Erfindung so stabil ist, daß sie sich auch bei einer Lagerung des Solubilisats über einen Zeitraum von mehr als 6 Monaten, bevorzugt von mehr als einem Jahr, besonders bevorzugt von mindestens drei Jahren nicht öffnet, läßt der Oxidationsschutz auch beim Verdünnen des Solubilisats nicht nach. Gemäß der Erfindung bleibt die Intensität der natürlichen Farbstoffe somit über mindestens 6 Monate, bevorzugt über mehr als ein Jahr, besonders bevorzugt über mindestens drei Jahre erhalten. Das Solubilisat ist sowohl mit Wasser beziehungsweise wäßrigen Medien, als auch mit Fetten und Ölen beziehungsweise hydrophoben Medien verdünnbar.

Als Emulgatoren können beispielsweise Polysorbate, insbesondere Polysorbat 80 und/oder Polysorbat 20 eingesetzt werden, welche auch für Lebensmittel zugelassen sind. Als Antioxidationsmittel können in vorteilhafter Weise Ascorbinsäure und/oder BHT und/oder BHA und/oder TBHQ als wasserlösliche Antioxidationsmittel und zumindest ein Tocpherol und/oder Carnolsäure als fettlösliche Antioxidationsmittel verwendet werden. Insbesondere Ascorbinsäure und Tocopherol sind Synergisten in ihrer antioxidativen Wirkung, einfach zu handhaben und insbesondere für den Einsatz in Lebensmitteln zugelassen. Je nach Anwendungsbereich kann im Rahmen der Erfindung das Solubilisat mit α-Tocopherol und/oder β-Tocopherol und/oder γ-Tocopherol und/oder δ-Tocopherol oder mit einem Mischtocopherol aus α-Tocopherol, β-Tocopherol, γ-Tocopherol und δ-Tocopherol hergestellt werden.

Es stellte sich für den Erfinder überraschend und vorteilhaft heraus, dass das Solubilisat auch beim Verdünnen mit Wasser nicht trüb wird. Das Solubilisat ist mit Wasser zu einer zumindest für das menschliche Auge transparenten Flüssigkeit verdünnbar. Dies eröffnet insbesondere für die Anwendung in Getränken vielfältige Möglichkeiten für den Einsatz des Solubilisats, da erfahrungsgemäß klare Getränke eine besonders hohe Akzeptanz beim Verbraucher haben.

Je nachdem, welche Farbstoffe für das Solubilisat und gegebenenfalls welche weiteren Zutaten für den betreffenden Anwendungsfall eingesetzt werden sollen, bietet die Erfindung Variationsmöglichkeiten für die Zusammensetzung, wobei immer ausreichend stabile Micellen erreicht werden. Die im Folgenden angegebenen Gewichtsanteile beziehen sich auf die Gesamtmasse des Solubilisats. Bereits mit einem Farbstoffanteil unterhalb von 20 Gew.-%, bevorzugt im Bereich von 3 Gew.-% bis 18 Gew.-% lassen sich Solubilisate für intensiv gefärbte Produkte erzielen.

Da die Antioxidationsmittel durch die erfindungsgemäße Formulierung in den Micellen geschützt werden, genügt bereits ein Anteil des wasserlöslichen Antioxidationsmittels unterhalb von 10 Gew.-% und liegt bevorzugt im Bereich von 2 Gew.-% bis 5 Gew.-% liegt und besonders bevorzugt 3 Gew.-%. Für den Anteil des fettlöslichen Antioxidationsmittels reichen weniger als 5 Gew.-% aus. Bevorzugt liegt der Anteil des fettlöslichen Antioxidationsmittels unterhalb von 3 Gew.-% und beträgt besonders bevorzugt 1 Gew.-%.

Ein stabiles Solubilisat für natürliche Farbstoffe wird durch die erfindungsgemäße Formulierung bereits dann erzielt, wenn das Solubilisat aus zumindest einem natürlichen Farbstoff, welcher in Wasser nicht oder nur schwer löslich ist, zumindest einem Emulgator mit einem HLB-Wert zwischen 8 und 19 und zumindest zwei Antioxidationsmitteln, von denen insbesondere eines wasserlöslich und das andere fettlöslich ist, und Wasser besteht.

In einer bevorzugten Weiterbildung der Erfindung enthält das Solubilisat zumindest einen weiteren fettlöslichen Hilfsstoff. Es hat sich gezeigt, daß durch den Zusatz mindestens eines weiteren fettlöslichen Hilfsstoffes die Bildung der Farbstoff-Micellen unterstützt wird.

Insbesondere kann zumindest ein mittelkettiges Triglycerid (medium chain triglyceride, MCT) oder eine Mischung aus mittelkettigen Triglyceriden als fettlöslicher Hilfsstoff eingesetzt werden. In der einfachsten Form besteht ein Solubilisat mit fettlöslichem Hilfsstoff aus zumindest einem natürlichen Farbstoff, welcher in Wasser nicht oder nur schwer löslich ist, zumindest einem Emulgator mit einem HLB-Wert zwischen 8 und 19 und zumindest zwei Antioxidationsmitteln, von denen insbesondere eines wasserlöslich und das andere fettlöslich ist, Wasser und zumindest einem weiteren fettlöslichen Hilfsstoff, insbesondere einem mittelkettigen Triglycerid (medium chain triglyceride, MCT) oder einer Mischung aus mittelkettigen Triglyceriden.

Insbesondere wasserlösliche Antioxidationsmittel wie beispielsweise Ascorbinsäure können unter den erfindungsgemäßen Bedingungen in der Micelle mit zunehmender Lagerzeit zum Auskristallisieren neigen. Durch das Auskristallisieren von Bestandteilen des Solubilisats ist die Stabilität der Micellen gefährdet, je nach sich bildenden Kristallgrößen und Kristallstrukturen können die Micellen zerstört werden. Das Auskristallisieren kann durch den Einsatz eines weiteren fettlöslichen Hilfsstoffs, insbesondere MCT, über einen Zeitraum von mindestens drei Jahren erfolgreich verhindert werden.

Die Micellen des Solubilisats, in welchen der Farbstoff und die Antioxidationsmittel gemeinsam eingeschlossen sind, haben einen Durchmesser unterhalb von 100 nm, bevorzugt im Bereich zwischen 4 nm und 30 nm, und besonders bevorzugt im Bereich zwischen 6 nm und 20 nm haben, gemessen nach dem Prinzip der dynamischen Lichtstreuung in 180° Rückstreuanordung mit Laserlicht der Wellenlänge 780 nm. Durch die kleinen Partikelgrößen wird vorteilhafterweise die Ausbildung einer insbesondere für die Wahrnehmung mit dem menschlichen Auge klaren Flüssigkeit erreicht. Die Klarheit des Solubilisats läßt sich auch durch seine geringe Trübung darstellen.

Zur experimentellen Bestimmung der Trübung werden die Trübungsmessgeräte mit einer Standardsuspension kalibriert. Die Anzeige erfolgt somit nicht in Form der gemessenen Lichtintensität, sondern als Konzentration der Kalibriersuspension. Bei der Messung einer beliebigen Suspension bedeutet also die Anzeige, dass die betreffende Flüssigkeit die gleiche Lichtstreuung verursacht wie die Standardsuspension der angezeigten Konzentration. Der international festgelegte Trübungsstandard ist Formazin. Zu den geläufigsten Einheiten gehört die Angabe "FNU", das heißt "Formazine Nephelometric Units". Dies ist die beispielsweise in der Wasseraufbereitung verwendete Einheit für die Messung bei 90° gemäss den Vorschriften der Norm ISO 7072. Die Trübung des erfindungsgemäßen Solubilisats ist kleiner als 30 FNU, bevorzugt kleiner als 20 FNU, und liegt besonders bevorzugt im Bereich zwischen 0,5 FNU und 2 FNU, gemessen durch Streulichtmessung mit Infrarotlicht nach den Vorschriften der Norm ISO 7027 bei einer Verdünnung des Solubilisats im Verhältnis 1:1000 in Wasser.

Zur Herstellung des Solubilisats stellt die Erfindung ein Verfahren zur Verfügung, welches die folgenden Schritte umfaßt:
a) Herstellen einer ersten Mischung aus zumindest einem natürlichen Farbstoff, welcher in Wasser nicht oder nur schwer löslich ist, und zumindest einen Emulgator mit einem HLB-Wert zwischen 8 und 19
b) Erwärmen der ersten Mischung auf eine Temperatur im Bereich zwischen 80°C und 150°C, wobei die Temperatur angepaßt an die Eigenschaften des Farbstoffs eingestellt wird,
c) Abkühlen der ersten Mischung auf eine Temperatur im Bereich von 50°C bis 70°C, bevorzugt im Bereich von 58°C bis 62°C,
d) Herstellen einer zweiten Mischung aus Wasser und Antioxidantien
e) Erwärmen der zweiten Mischung auf eine Temperatur im Bereich zwischen 60°C und 70°C, bevorzugt im Bereich zwischen 63°C und 65°C,
f) Vereinigen der ersten Mischung und der zweiten Mischung unter Homogenisieren und Erwärmen auf eine Temperatur im Bereich von 80°C bis 90°C, bevorzugt im Bereich zwischen 84°C und 86°C unter Bildung des Solubilisats, in welchem der Farbstoff und die Antioxidationsmittel gemeinsam in Micellen eingeschlossen vorliegen,
g) Abkühlen des Solubilisats auf eine Temperatur unterhalb von 50°C.

In Schritt g) wird die Abkühlrate in Abhängigkeit von den Eigenschaften des Farbstoffes derart eingestellt, daß die Micellen, in welchen der Farbstoff und die Antioxidationsmittel gemeinsam in Micellen eingeschlossen vorliegen, nicht zerstört werden.

Für das Verständnis der Erfindung ist es wichtig, die Erkenntnis des Erfinders in Betracht zu ziehen, daß die Micellenbildung nicht alleine durch die Herstellung eines Stoffgemisches in einem beliebigen Mischverhältnis erreicht werden kann. Selbst durch die korrekte Wahl beziehungsweise Einhaltung des Mischverhältnisses, das Gegenstand der Erfindung ist, kann lediglich eine Emulsion entstehen, in der der Farbstoff und die Antioxidantien grob dispers verteilt vorliegen. Das heißt, die Emulsion enthält ohne einheitliche Struktur verschieden große Aggregate beziehungsweise Tropfen von Farbstoff und Antioxidationsmitteln in der Größe einiger Mikrometer, also bis zu dem Tausendfachen einer Micellengröße.

Diese nicht im Sinn der Erfindung micellar integrierten Antioxidationsmittel bieten dem Farbstoff spätestens in einem Endprodukt keinen ausreichenden Schutz vor Oxidation mehr. Solch eine Emulsion ist im Gegensatz zum erfindungsgemäßen, micellenbasierten Solubilisat trüb und ergibt in einer Verdünnung mit Wasser ebenfalls eine trübe Flüssigkeit. Die Vollendung der Ausbildung der gemäß der Erfindung spezifisch mit Farbstoff und Antioxidationsmitteln beladenen Micellen Produktionsprozess stellt daher eine Besonderheit des erfindungsgemäßen Verfahrens dar.

Aus diesem Grund wird die Vollendung der Micellenbildung im Laufe der Herstellung mit dem erfindungsgemäßen Verfahren vorteilhafterweise mit Hilfe einer sogenannten Durchlichtmessung kontrolliert. Diese Kontrolle wird in einer bevorzugten Weiterbildung kontinuierlich durchgeführt. Dazu wird die Herstellung des Solubilisats in einem Rührkessel durchgeführt, welcher mit einem Fenster ausgerüstet ist. Durch das Fenster wird ein Laserlichtstrahl in das Innere des Rührkessels geleitet. Das Licht wandert durch die Flüsigkeit im Innern des Rührkessels, aus welcher das Solubilisat hergestellt wird, trifft auf die dem Fenster gegenüberliegende Innenwand des Rührkessels auf, wird dort reflektiert und tritt durch das Fenster wieder aus dem Rührkessel aus. So kann durch das Fenster während der Herstellung des Solubilisats auf der Innenwand des Rührkessels ein Lichtpunkt beobachtet werden. Erst, wenn der senkrecht zur Wand des Rührkessels ausgerichtete Laserstrahl ohne geringste Lichtstreuung als Lichtpunkt mit etwa 5 mm Durchmesser auf der gegenüberliegende Innenseite des Rührkessels gesichtet wird, ist der Prozess der Micellenbildung abgeschlossen. Dies kann dadurch erklärt werden, dass die gebildeten Micellen einen kleineren Durchmesser als die Wellenlänge des sichtbaren Lichtes des verwendeten Lasers aufweisen.

In einer vorteilhaften Weiterbildung des Verfahrens wird zusätzlich zu dem Farbstoff und dem Emulgator zumindest ein fettlöslicher Hilfsstoff, beispielsweise ein mittelkettiges Triglycerid oder eine Mischung mittelkettiger Triglyceride, verwendet. Dazu bietet das Verfahren verschiedene Möglichkeiten, aus denen der Fachmann je nach Eigenschaften, insbesondere Temperaturempfindlichkeit des betreffenden Farbstoffs, die geeignete Variante auswählen wird.

Der fettlösliche Hilfsstoff kann beispielsweise in Schritt a) beim Herstellen der ersten Mischung eingebracht werden. In einer Ausführungsform der Erfindung wird Schritt a) dabei folgendermaßen durchgeführt:
a1) Mischen des fettlöslicher Hilfsstoff, beispielsweise ein mittelkettiges Triglycerid oder eine Mischung mittelkettiger Triglyceride,
a2) Erwärmen der Mischung aus Emulgator und fettlöslichem Hilfsstoff auf eine Temperatur im Bereich zwischen 60°C und 95°C, ,
a3) Vereinigen des Farbstoffs mit der Mischung aus Emulgator und fettlöslichem Hilfsstoff.

Alternativ kann Schritt a) auch wie folgt durchgeführt werden:
a11) Mischen des Farbstoffs mit zumindest einem fettlöslichen Hilfsstoff, beispielsweise einem mittelkettiges Triglycerid oder einer Mischung mittelkettiger Triglyceride,
a22) Erwärmen der Mischung aus Farbstoff und fettlöslichen Hilfsstoff auf eine Temperatur im Bereich zwischen 55°C und 85°C, wobei die Temperatur angepaßt an die Eigenschaften des Farbstoffs eingestellt wird,
a33) Vereinigen des Emulgators mit der Mischung aus Farbstoff und fettlöslichem Hilfsstoff.

Des Weiteren bietet das erfindungsgemäße Verfahren die Möglichkeit, in Schritt d) beim Herstellen der zweiten Mischung zusätzlich zu Wasser und den Antioxidantien zumindest einen fettlöslicher Hilfsstoff, beispielsweise ein mittelkettiges Triglycerid oder eine Mischung mittelkettiger Triglyceride zu verwenden.

Die Erfindung betrifft außerdem die Verwendung des oben beschriebenen Solubilisats als Zusatz zu Lebensmitteln, insbesondere zu Getränken, Kosmetika oder Pharmazeutika. Da die Micelle den in ihr befindlichen Inhalt mit Farbstoff und Antioxidantien auch in einem Endprodukt wie in einem Lebensmittel, speziell einem Getränk, nicht freisetzt, stehen die in der Micelle enthaltenen Antioxidantien im wesentlichen ausschließlich dem Farbstoff als Schutzschild zur Verfügung, so daß das betreffende Lebensmittel über lange Zeit intensiv gefärbt bleibt. Die Erfindung bezieht sich daher auch auf ein Lebensmittel, insbesondere Getränk, ein kosmetisches Produkt und ein pharmazeutisches Produkt, welches ein derartiges Solubilisat enthält.

Die Erfindung wird nachfolgend anhand von Ausführungsbeispielen und unter Bezugnahme auf die beigefügten Abbildungen näher erläutert. Es zeigen:
- Figur 1:: Schematische Darstellungen einer Modellvorstellung zum Unterschied einer wäßrigen micellaren Lösung des Solubilisats gemäß der Erfindung (mittleres Bild und Detaildarstellung rechts) gegenüber einer Emulsion (linkes Bild),
- Figur 2: Schematische Darstellung zum Meßprinzip der dynamischen Lichtstreuung für die Bestimmung der Micellengröße, angelehnt an die Darstellung des Herstellers des verwendeten Meßgerätes unter www.particle-metrix.de,
- Figur 3: Anzahlsummenverteilungen der Solubilisate aus den Proben 1 bis 8, gemessen in einer wäßrigen Verdünnung von 1:1000,
- Figur 4: Anzahldichteverteilungen der Solubilisate aus den Proben 1 bis 8, gemessen in einer wäßrigen Verdünnung von 1:1000,
- Figur 5: Meßergebnisse zur Partikelgrößenverteilung für die Probe 1,
- Figur 6: Meßergebnisse zur Partikelgrößenverteilung für die Probe 2,
- Figur 7: Meßergebnisse zur Partikelgrößenverteilung für die Probe 3,
- Figur 8: Meßergebnisse zur Partikelgrößenverteilung für die Probe 4,
- Figur 9: Meßergebnisse zur Partikelgrößenverteilung für die Probe 5,
- Figur 10: Meßergebnisse zur Partikelgrößenverteilung für die Probe 6,
- Figur 11: Meßergebnisse zur Partikelgrößenverteilung für die Probe 7,
- Figur 12: Meßergebnisse zur Partikelgrößenverteilung für die Probe 8 und
- Figur 13: eine fotografische Aufnahme der Proben 1 bis 8, angeordnet von links nach rechts entsprechend einem Farbverlauf von Grün über Gelb nach Orange.

Im Gegensatz zu den Solubilisaten gemäß der Erfindung sind herkömmliche Produkte, welche natürliche Farbstoffe in wasserdispergierbarer Form bereitstellen, als Emulsionen formuliert. In Figur 1 wird anhand einer Modellvorstellung der Unterschied zwischen einem Solubilisat 1 der Erfindung mit Micellen 2 und einer Emulsion 100 eines Farbstoffes 4 erläutert. Als Beispiel für ein hydrophiles Antioxidationsmittel 5 sei Ascorbinsäure und als Beispiel für ein hydrophobes Antioxidationsmittel 6 sei Tocopherol betrachtet.

In der wässrigen kontinuierlichen Phase der Emulsion 100 ist neben dem Emulgator 3 das hydrophile Antioxidationsmittel 5 und Sauerstoff 7 gelöst. Die hydrophoben Bestandteile des Farbstoffes 4 und des hydrophoben Antioxidationsmittels 6 liegen zusammengelagert in Aggregaten beziehungsweise Tropfen vor. Die Größe der Aggregate beziehungsweise Tropfen liegt bei Abmessungen im Bereich der Wellenlänge von sichtbarem Licht, so daß die Emulsion 100 für das menschliche Auge trüb erscheint.

Die Aggregate beziehungsweise Tropfen des hydrophoben Antioxidationsmittels 6 reagieren nur an ihrer Oberfläche mit dem Sauerstoff 7, während das im Inneren des Aggregats vorhandene Antioxidationsmittel 6 nicht oder nur äußerst langsam an der Reaktion mit Sauerstoff 7 teilnehmen kann. Gleichzeitig wird das gemeinsam mit dem Sauerstoff 7 in der kontinuierlichen Phase gelöste hydrophile Antioxidationsmittel 5 aufgrund der molekularen Verteilung sehr schnell durch Oxidationsreaktion mit dem Sauerstoff 7 verbraucht. Beide Antioxidationsmittel 5, 6 schützen somit den Farbstoff 4 nicht ausreichend vor Oxidation.

Im Gegensatz dazu liegen in einer wäßrigen micellaren Lösung des Solubilisats 1 das hydrophile Antioxidationsmittel 5, das hydrophobe Antioxidationsmittel 6 und der Farbstoff 4 gemeinsam in einer Micelle 2 vor. Aus Gründen der Übersichtlichkeit nicht dargestellt sind Moleküle eines fettlöslichen Hilfsstoffs, welche bei dessen Verwendung ebenfalls im Inneren der Micelle angeordnet sein können. Sauerstoff 7 befindet sich in der wäßrigen Phase außerhalb der Micelle. Die Größe der Micellen liegt mit mittleren Werten um 20 nm deutlich unter dem Bereich der Wellenlänge von sichtbarem Licht, so daß die micellare Lösung des Solubilisats 1 für das menschliche Auge kristallklar erscheint. Die Größe des Micellinneren, in welchem sich alle Bestandteile des Solubilisats außer dem Emulgator befinden, wurde für ein Solubilisat aus Farbstoff, in Wasser gelöster Ascorbinsäure, Tocopherol und MCT mit etwa 5 nm abgeschätzt.

Bei Kontakt des Solubilisats 1 mit Sauerstoff 7 wird nur der in die Micelle 2 eindringende Sauerstoff 7 durch die Antioxidationsmittel 5, 6 bekämpft. Diese sind infolge der erfindungsgemäßen Formulierung in der Lage, bei Kontakt mit Sauerstoff sofort und vollständig oxidiert zu werden. Somit ist bei gleicher Menge an Antioxidantien im Vergleich zur Emulsion 100 eine deutliche höhere Abbaugeschwindigkeit des Sauerstoffs vorhanden. Gleichzeitig liegt der Farbstoff geschützt in unmittelbarer Nachbarschaft der Antioxidantien vor, so daß kein Angriff von Sauerstoff auf reinen Farbstoff wie bei der Emulsion 100 erfolgt.

Da die Micelle den in ihr befindlichen Inhalt auch in einem Endprodukt wie in einem Getränk nicht freisetzt, stehen die in der Micelle enthaltenen Antioxidantien ausschließlich dem Farbstoff als Schutzschild zur Verfügung. Auch wenn eine Emulsion, die die gleichen Bestandteile der Micelle enthält, hergestellt werden würde, würde diese nicht denselben technologischen Vorteil bieten.

Im folgenden werden Ausführungsbeispiele für Solubilisate von acht verschiedenen natürlichen Farbstoffen beschrieben.

In den Rezepturen wird für die Inhaltsstoffe jeweils eine AGT-Material-Nr. angegeben. Dabei handelt es sich um eine Prüfnummer, die der Anmelder für jede verwendete Substanz vergibt und anhand der sich die Identität der jeweils verwendeten Zutat für das Solubilisat zurückverfolgen läßt. Für diese Solubilisate wurden zum Teil die Partikelgrößenverteilungen gemessen und die Trübung bestimmt.

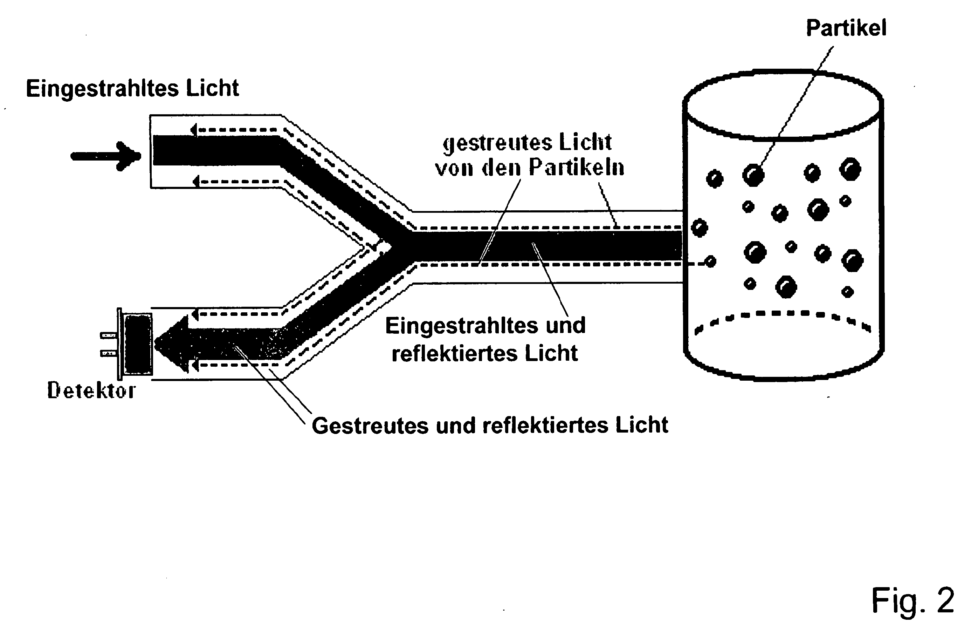

Die Partikelgrößenmessungen wurden mit dem ParticleMetrix NANOTRAC Rückstreu-Teilchenanalysator durchgeführt. Das Messprinzip beruht auf der dynamischen Lichtstreuung (DLS) in einer 180° Heterodyn-Rückstreuanordnung. Bei dieser Geometrie wird zum gestreuten Licht ein Teil des Laserstrahls dazu gemischt. Dies hat denselben positiven Effekt hinsichtlich des Signal/Rausch-Verhältnisses wie die Überlagerung aller Lichtwellenlängen in einem Fourier-Spektrometer. In Figur 2 wird das Meßprinzip in einer schematischen Darstellung grafisch verdeutlicht.

Das Laserlicht einer Wellenlänge von 780 nm wird auf der einen Seite einer Lichtfasergabel eingekoppelt. Zurück kommt in derselben Faser der Anteil des an der Glaswand des Meßbehälters reflektierten Laserlichts und das von der Probe rückwärts gestreute Licht. Beides teilt sich gleichmäßig auf die beiden Lichtleiteräste auf. Im Detektor des zweiten Astes der Lichtleitergabel wird das gemischte Licht registriert. Die Fluktuation des Signals, das durch die Brown'sche Bewegung im Streulicht und damit im Gesamtsignal ergibt, wird über die Stokes-Einstein-Beziehung und eine schnelle Fourier-Analyse in eine Partikelgrößenverteilung umgerechnet. Die Farbe der Probe hat keinen Einfluss auf die Qualität der Messung. Der detektierbare Partikelgrößenbereich erstreckt sich von 0,8 nm bis 6500 nm. Die Messungen wurden in 1000facher wäßriger Verdünnung durchgeführt. Das Solubilisat wurde dazu unter Rühren in Wasser gelöst. Es ist vollständig klar in Wasser löslich. Diese Lösung ist stabil, transparent.

Die Trübung einer Probe beruht darauf, dass einfallendes Licht an den suspendierten Teilchen von ungelöste, fein verteilten Substanzen gestreut wird. Trifft ein gerader Lichtstrahl auf diese Partikel, so wird das Licht in alle Richtungen gestreut. Zur Trübungsmessung wurde eine Streulichtmessung mit Infrarotlicht durchgeführt. Bei geringen Trübungswerten kann von einer geringen Anzahl von ungelösten Inhaltsstoffen ausgegangen werden.

### Ausführungsbeispiele

Die folgenden Ausführungsbeispiele basieren auf Solubilisaten mit Ascorbinsäure und Tocopherol als Antioxidantien. Es seibetont, daß statt dessen im Rahmen der Erfindung auch andere Antioxidantien verwendet werden können.

### 1. Solubilisat mit Zeaxanthin als Farbstoff

Zur Herstellung der Probe 1 wurde folgende Rezeptur verwendet:
- 90 g: Zeaxanthin 20 % FS, DSM/Brenntag (AGT-Material-Nr. 10785/037)
- 810 g: Polysorbat 80 Crillet 4, CRODA (AGT-Material-Nr. 10530/111)
- 30 g: Ascorbinsäure, BASF (AGT-Material-Nr. 10710/005)
- 30 g: Aqua dest. (AGT-Material-Nr. 10180)
- 30 g: mittelkettige Triglyceride: Pantex MCT oil, InCoPa oder Delios VK, Cognis (AGT-Material-Nr. 10460/102 bzw. 10460/016)
- 10 g: Mischtocopherol Decanox MTS 70-IP, ADM/Parmentier (AGT-Material-Nr. 10727/001)

Das Zeaxanthin wurde auf eine Temperatur von 84 ± 1 °C erhitzt. Dann wurde das Polysorbat 80 als Emulgator zugegeben und die Mischung auf 140 ± 2 °C erhitzt. Anschließend erfolgte eine Abkühlung auf 60 ± 2 °C. In einem zweiten Gefäß wurde Wasser, Ascorbinsäure, MCT-Öl und Mischtocopherol vermischt und unter Rühren erwärmt auf 64 ± 1 °C. Dann wurde das Zeaxanthin-haltige Gemisch zu dem Ascorbinsäure/Mischtocopherol-haltigen Gemisch gegeben. Die gesamte Mischung wurde homogenisiert und nochmals erhitzt auf eine Temperatur von 85 ± 1 °C. Es erfolgte anschließend ein Abkühlen auf eine Temperatur unterhalb von 50 °C. Dann kann das Solubilisat abgefüllt werden.

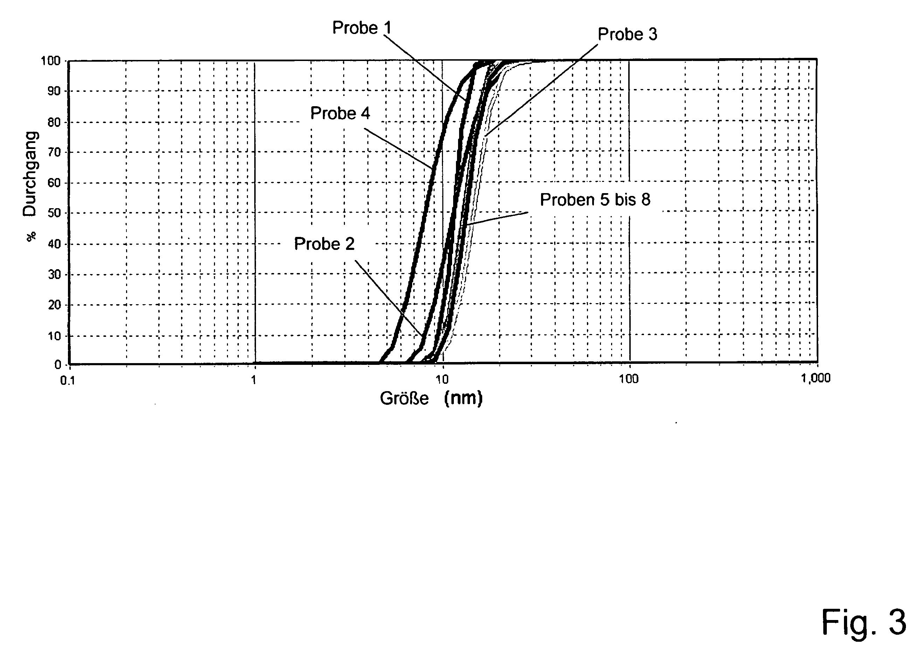

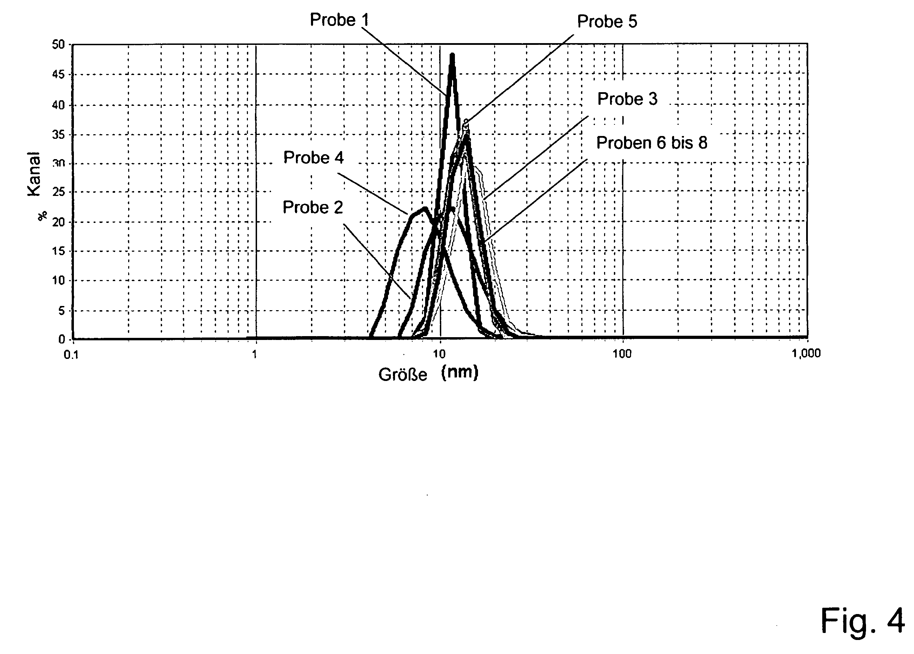

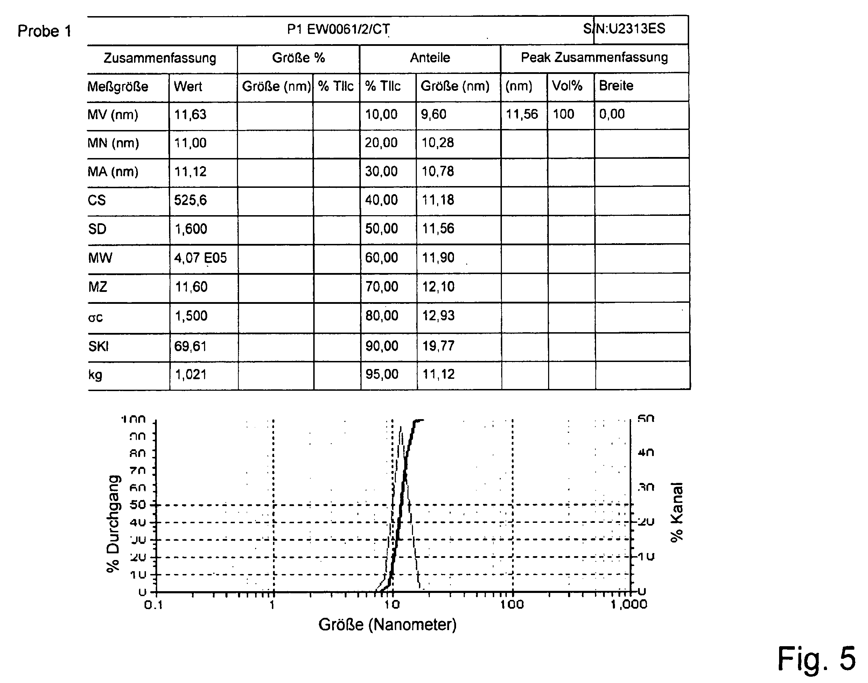

Das Solubilisat enthält 1,5 Gew.-% reines Zeaxanthin und ist dunkelrot und zähflüssig. Die Daten der Partikelgrößenverteilung des Solubilisats sind in Figur 5 dargestellt. In den Figuren 3 und 4 ist die Anzahlsummen- und Anzahldichteverteilung des Solubilisats der Probe 1 im Vergleich zu den Verteilungen der anderen Proben dargestellt.

### 2. Solubilisat mit Beta-Carotin als Farbstoff

Zur Herstellung der Probe 2 wurde folgende Rezeptur verwendet:
- 64 g: Beta-Carotin: Betatene 30 % OLV, Cognis (AGT-Material-Nr. 10091/016)
- 410 g: Polysorbat 80, Lamesorb SMO 20 koscher Cognis (AGT-Material-Nr. 10530/016)
- 410 g: Polysorbat 20, Lamesorb SML 20 koscher Cognis (AGT-Material-Nr. 10520/016)
- 16 g: mittelkettige Triglyceride: Pantex MCT oil, InCoPa oder Delios VK, Cognis (AGT-Material-Nr. 10460/102 bzw. 10460/016)
- 30 g: Ascorbinsäure, BASF (AGT-Material-Nr. 10710/005)
- 30 g: Aqua dest. (AGT-Material-Nr. 10180)
- 30 g: mittelkettige Triglyceride: Pantex MCT oil, InCoPa oder Delios VK, Cognis (AGT-Material-Nr. 10460/102 bzw. 10460/016)
- 10 g: Mischtocopherol Decanox MTS 70-IP, ADM/Parmentier (AGT-Material-Nr. 10727/001)

Das Beta-Carotin wurde auf eine Temperatur von 55 ± 5 °C erwärmt. Dann wurden die Polysorbate als Emulgatormischung und 16 g MCT-Öl auf eine Temperatur von 65 ± 5 °C erwärmt und gemischt. Diese Mischung wurde zum Beta-Carotin gegeben und die entstandene Mischung unter Rühren homogenisiert und weiter auf 145 ± 2 °C erhitzt. Anschließend erfolgte eine Abkühlung auf 60 ± 2 °C. In einem zweiten Gefäß wurde Wasser, Ascorbinsäure, 30 g MCT-Öl und Mischtocopherol vermischt und unter Rühren erwärmt auf 64 ± 1 °C. Dann wurde das Beta-Carotin-haltige Gemisch zu dem Ascorbinsäure/Mischtocopherol-haltigen Gemisch gegeben. Die gesamte Mischung wurde homogenisiert und nochmals erhitzt auf eine Temperatur von 85 ± 1 °C. Es erfolgte anschließend ein Abkühlen auf eine Temperatur unterhalb von 50 °C. Dann kann das Solubilisat abgefüllt werden.

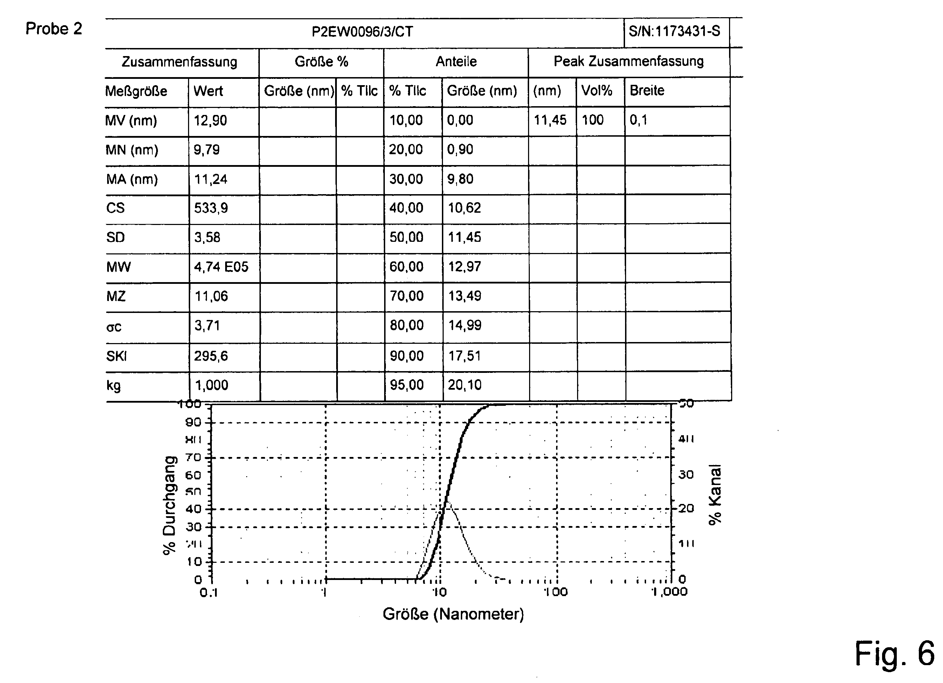

Das Solubilisat enthält 1,9 Gew.-% reines Beta-Carotin und ist intensiv rot und zähflüssig. Die Daten der Partikelgrößenverteilung des Solubilisats sind in Figur 6 dargestellt. In den Figuren 3 und 4 ist die Anzahlsummen- und Anzahldichteverteilung des Solubilisats der Probe 2 im Vergleich zu den Verteilungen der anderen Proben dargestellt.

### 3. Solubilisat mit Paprika-Oleoresin als Farbstoff

Zur Herstellung der Probe 3 wurde folgende Rezeptur verwendet:
- 180 g: Paprika-Oleoresin 100.000 F.E. (E160c), Henry Lamotte (AGT-Material-Nr. 10481/068)
- 720 g: Polysorbat 80 Crillet 4, CRODA oder Lamesorb SMO 20, Cognis (AGT-Material-Nr. 10530/111 oder 10530/016)
- 30 g: Ascorbinsäure, BASF (AGT-Material-Nr. 10710/005)
- 30 g: Aqua dest. (AGT-Material-Nr. 10180)
- 30 g: mittelkettige Triglyceride Pantex MCT oil, InCoPa oder Delios VK koscher, Cognis (AGT-Material-Nr. 10460/102 bzw. 10460/016)
- 10 g: Mischtocopherol Decanox MTS 70-IP, ADM/Parmentier (AGT-Material-Nr. 10727/001)

Das Paprika Oleoresin wurde auf eine Temperatur von 60 ± 10 °C erwärmt. Das Polysorbat wurde auf eine Temperatur von 87,5 ± 2,5 °C erwärmt. Dann wurden Paprika Oleoresin und Polysorbat 80 gemischt und unter Rühren bei einer Temperatur von 87,5 ± 2,5 °C homogenisiert. Anschließend erfolgte eine Abkühlung auf 60 ± 2 °C. In einem zweiten Gefäß wurde Wasser, Ascorbinsäure, MCT-Öl und Mischtocopherol vermischt und unter Rühren erwärmt auf 64 ± 1 °C. Dann wurde das Paprika-Oleoresin-haltige Gemisch zu dem Ascorbinsäure/Mischtocopherol-haltigen Gemisch gegeben. Die gesamte Mischung wurde homogenisiert und nochmals erhitzt auf eine Temperatur von 85 ± 1 °C. Es erfolgte anschließend ein Abkühlen auf eine Temperatur unterhalb von 50 °C. Dann kann das Solubilisat abgefüllt werden.

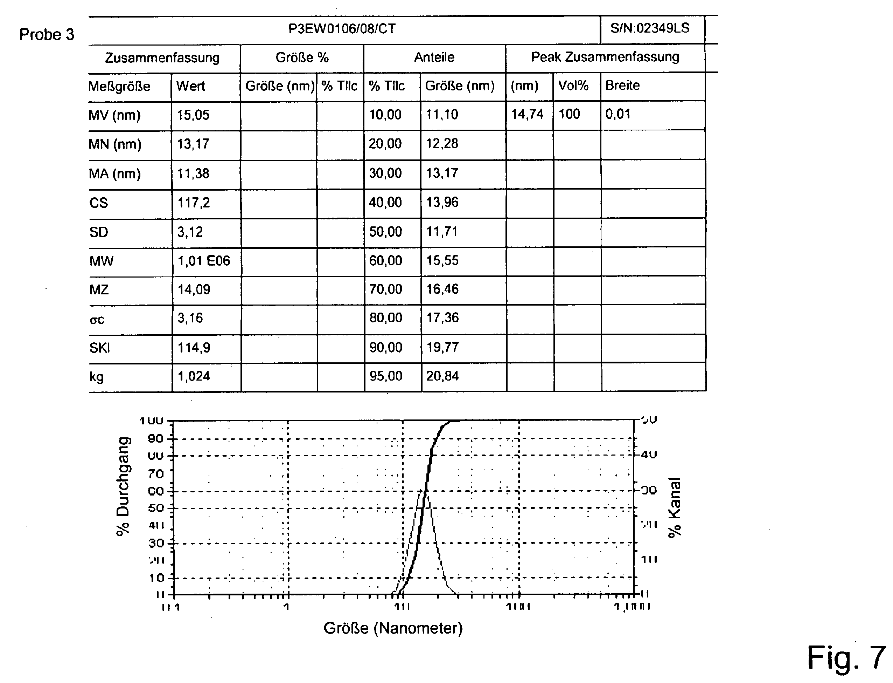

Das Solubilisat enthält 18 Gew.-% Paprika Oleoresin und ist intensiv rot und zähflüssig. Die Daten der Partikelgrößenverteilung des Solubilisats sind in Figur 7 dargestellt. In den Figuren 3 und 4 ist die Anzahlsummen- und Anzahldichteverteilung des Solubilisats der Probe 3 im Vergleich zu den Verteilungen der anderen Proben dargestellt.

### 4. Solubilisat mit Curcumin als Farbstoff

Zur Herstellung der Probe 4 wurde folgende Rezeptur verwendet:
- 60 g: Curcumin-Pulver, AKAY Flavours & Aromatics, enthält mindestens 90 % Curcumin (AGT-Material-Nr. 10175/115)
- 840 g: Polysorbat 80 Crillet 4, CRODA (AGT-Material-Nr. 10530/111)
- 30 g: Ascorbinsäure, BASF (AGT-Material-Nr. 10710/005)
- 30 g: Aqua dest. (AGT-Material-Nr. 10180)
- 30 g: mittelkettige Triglyceride: Pantex MCT oil, InCoPa oder Delios VK, Cognis (AGT-Material-Nr. 10460/102 bzw. 10460/016)
- 10 g: Mischtocopherol Decanox MTS 70-IP, ADM/Parmentier (AGT-Material-Nr. 10727/001)

Das Polysorbat wurde auf eine Temperatur von 50 ± 2 °C erwärmt. Dann wurde das Curcumin-Pulver unter Rühren bei weiterer Erwärmung auf eine Temperatur von 89 ± 1 °C zu dem Polysorbat gegeben. Anschließend erfolgte eine Abkühlung auf 60 ± 2 °C. In einem zweiten Gefäß wurde Wasser, Ascorbinsäure, MCT-Öl und Mischtocopherol vermischt und unter Rühren erwärmt auf 64 ± 1 °C. Dann wurde das Curcumin-haltige Gemisch zu dem Ascorbinsäure/Mischtocopherol-haltigen Gemisch gegeben. Die gesamte Mischung wurde homogenisiert und nochmals erhitzt auf eine Temperatur von 85 ± 1 °C. Es erfolgte anschließend ein Abkühlen auf eine Temperatur unterhalb von 50 °C. Dann kann das Solubilisat abgefüllt werden.

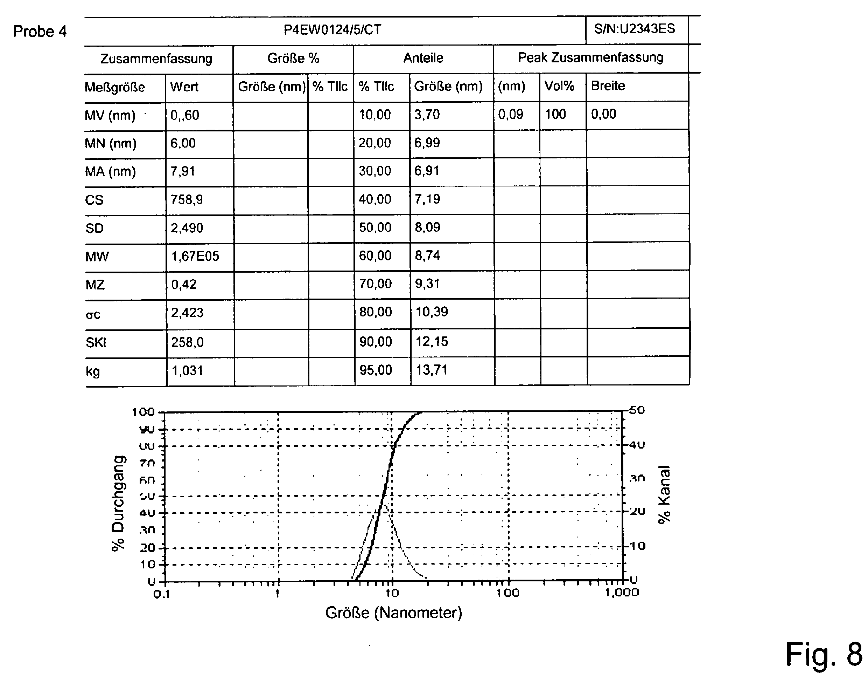

Das Solubilisat enthält 5,5 Gew.-% Curcumin und ist sehr dunkel farbintensiv gelb-orange bis rötlich und zähflüssig. Die Daten der Partikelgrößenverteilung des Solubilisats sind in Figur 8 dargestellt. In den Figuren 3 und 4 ist die Anzahlsummen- und Anzahldichteverteilung des Solubilisats der Probe 4 im Vergleich zu den Verteilungen der anderen Proben dargestellt.

### 5. Solubilisat mit Apocarotenal als Farbstoff

Zur Herstellung der Probe 5 wurde folgende Rezeptur verwendet:
- 90 g: Apocarotenal 20 % S (20 % Apocarotenal), DSM/über Brenntag (AGT-Material-Nr. 10093/037)
- 18 g: mittelkettige Triglyceride: Pantex MCT oil, InCoPa oder Delios VK, Cognis (AGT-Material-Nr. 10460/102 bzw. 10460/016)
- 792 g: Polysorbat 80 Crillet 4, CRODA (AGT-Material-Nr. 10530/111)
- 30 g: Ascorbinsäure, BASF (AGT-Material-Nr. 10710/005)
- 30 g: Aqua dest. (AGT-Material-Nr. 10180)
- 30 g: mittelkettige Triglyceride: Pantex MCT oil, InCoPa oder Delios VK, Cognis (AGT-Material-Nr. 10460/102 bzw. 10460/016)
- 10 g: Mischtocopherol Decanox MTS 70-IP, ADM/Parmentier (AGT-Material-Nr. 10727/001)

Polysorbat und 18 g MCT-Öl wurden auf eine Temperatur von 65 ± 2 °C erwärmt und gemischt. Apocarotenal wurde in diese Mischung unter Rühren eingearbeitet und die entstandene Mischung auf 140 ± 2 °C erhitzt und homogenisiert. Anschließend erfolgte eine Abkühlung auf 60 ± 2 °C. In einem zweiten Gefäß wurde Wasser, Ascorbinsäure, MCT-Öl und Mischtocopherol vermischt und unter Rühren erwärmt auf 64 ± 1 °C. Dann wurde das Apocarotenal-haltige Gemisch zu dem Ascorbinsäure/Mischtocopherol-haltigen Gemisch gegeben. Die gesamte Mischung wurde homogenisiert und nochmals erhitzt auf eine Temperatur von 85 ± 1 °C. Es erfolgte anschließend ein Abkühlen auf eine Temperatur unterhalb von 50 °C. Dann kann das Solubilisat abgefüllt werden.

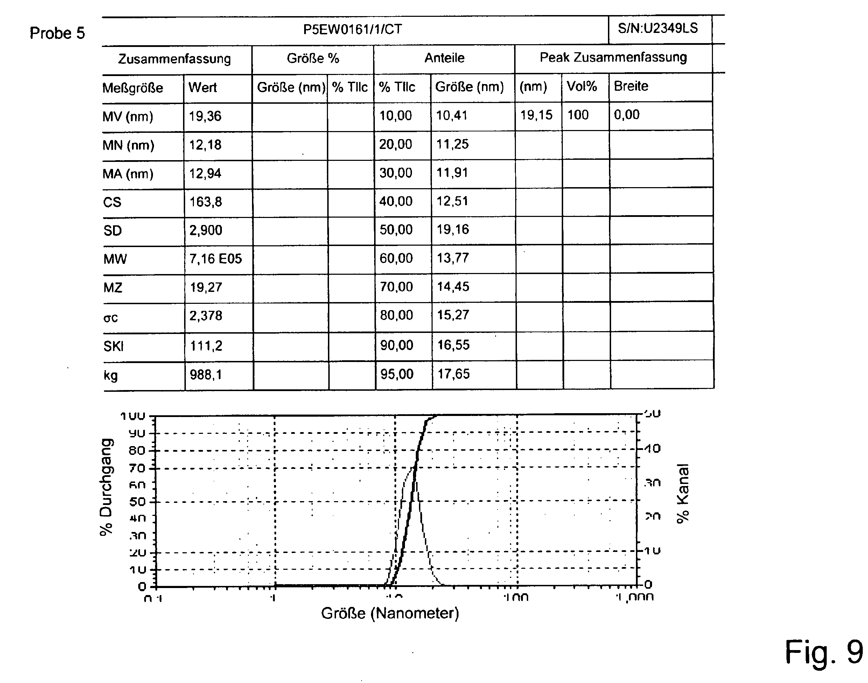

Das Solubilisat enthält 1,5 Gew.-% reines Apocarotenal und ist dunkelrot bis braun/schwarz intensiv gefäbrt, jedoch klar, und zähflüssig. Die Daten der Partikelgrößenverteilung des Solubilisats sind in Figur 9 dargestellt. In den Figuren 3 und 4 ist die Anzahlsummen- und Anzahldichteverteilung des Solubilisats der Probe 5 im Vergleich zu den Verteilungen der anderen Proben dargestellt.

### 6. Solubilisat mit Lycopin als Farbstoff

Zur Herstellung der Probe 6 wurde folgende Rezeptur verwendet:
- 35 g: Lycopin (65 %), CEDA (AGT-Material-Nr. 10442/114)
- 100 g: mittelkettige Triglyceride: Pantex MCT oil, InCoPa oder Delios VK, Cognis (AGT-Material-Nr. 10460/102 bzw. 10460/016)
- 765 g: Polysorbat 80 Crillet 4, CRODA (AGT-Material-Nr. 10530/111)
- 30 g: Ascorbinsäure, BASF (AGT-Material-Nr. 10710/005)
- 30 g: Aqua dest. (AGT-Material-Nr. 10180)
- 30 g: mittelkettige Triglyceride: Pantex MCT oil, InCoPa oder Delios VK, Cognis (AGT-Material-Nr. 10460/102 bzw. 10460/016)
- 10 g: Mischtocopherol Decanox MTS 70-IP, ADM/Parmentier (AGT-Material-Nr. 10727/001)

Lycopin wurde in 18 g MCT-Öl gelöst und bei einer Temperatur von 60 ± 2 °C gemischt. Polysorbat wurde in diese Mischung unter Rühren eingearbeitet und die entstandene Mischung auf 100 ± 2 °C erhitzt. Anschließend erfolgte eine Abkühlung auf 60 ± 2 °C. In einem zweiten Gefäß wurde Wasser, Ascorbinsäure, MCT-Öl und Mischtocopherol vermischt und unter Rühren erwärmt auf 64 ± 1 °C. Dann wurde das Apocarotenal-haltige Gemisch zu dem Ascorbinsäure/Mischtocopherol-haltigen Gemisch gegeben. Die gesamte Mischung wurde homogenisiert und nochmals erhitzt auf eine Temperatur von 85 ± 1 °C. Es erfolgte anschließend ein Abkühlen auf eine Temperatur unterhalb von 50 °C. Dann kann das Solubilisat abgefüllt werden.

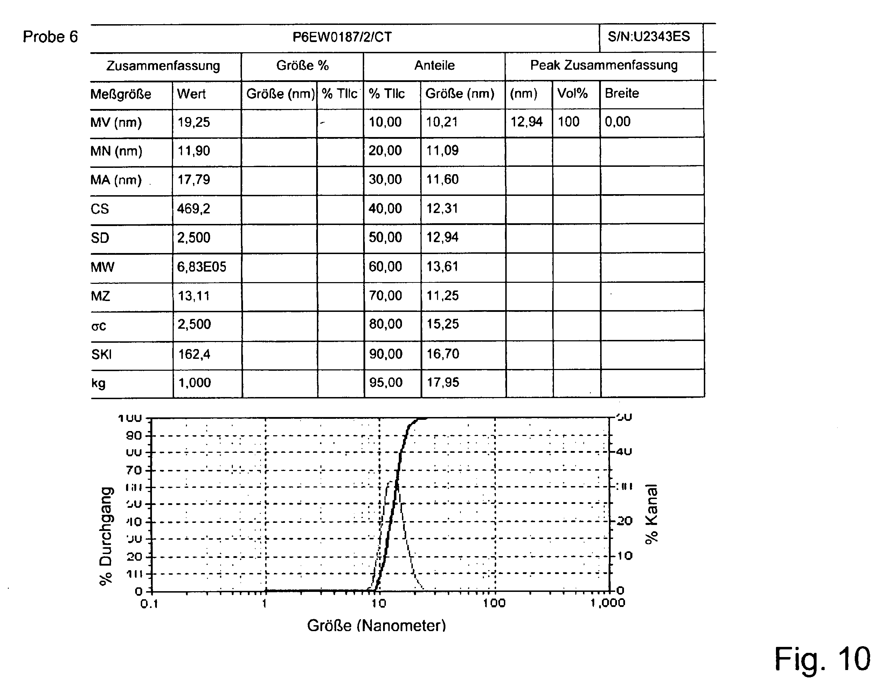

Das Solubilisat enthält 2 Gew.-% reines Lycopin und ist dunkelrot und zähflüssig. Die Daten der Partikelgrößenverteilung des Solubilisats sind in Figur 10 dargestellt. In den Figuren 3 und 4 ist die Anzahlsummen- und Anzahldichteverteilung des Solubilisats der Probe 6 im Vergleich zu den Verteilungen der anderen Proben dargestellt.

### 7. Solubilisat mit Chlorophyll als Farbstoff

Zur Herstellung der Probe 7 wurde folgende Rezeptur verwendet:
- 60 g: Chlorophyll 03M K (23 %), Phytone (AGT-Material-Nr. 10135/117)
- 100 g: mittelkettige Triglyceride: Pantex MCT oil, InCoPa oder Delios VK, Cognis (AGT-Material-Nr. 10460/102 bzw. 10460/016)
- 740 g: Polysorbat 80 Crillet 4, CRODA (AGT-Material-Nr. 10530/111)
- 30 g: Ascorbinsäure, BASF (AGT-Material-Nr. 10710/005)
- 30 g: Aqua dest. (AGT-Material-Nr. 10180)
- 30 g: mittelkettige Triglyceride: Pantex MCT oil, InCoPa oder Delios VK, Cognis (AGT-Material-Nr. 10460/102 bzw. 10460/016)
- 10 g: Mischtocopherol Decanox MTS 70-IP, ADM/Parmentier (AGT-Material-Nr. 10727/001)

Chlorophyll wurde in 100 g MCT-Öl gelöst und bei einer Temperatur von 80 ± 2 °C gemischt. Polysorbat wurde in diese Mischung unter Rühren eingearbeitet und die entstandene Mischung auf 85 ± 1 °C erhitzt. Anschließend erfolgte eine Abkühlung auf 60 ± 2 °C. In einem zweiten Gefäß wurde Wasser, Ascorbinsäure, MCT-Öl und Mischtocopherol vermischt und unter Rühren erwärmt auf 64 ± 1 °C. Dann wurde das Apocarotenal-haltige Gemisch zu dem Ascorbinsäure/Mischtocopherol-haltigen Gemisch gegeben. Die gesamte Mischung wurde homogenisiert und nochmals erhitzt auf eine Temperatur von 85 ± 1 °C. Es erfolgte anschließend ein Abkühlen auf eine Temperatur unterhalb von 50 °C. Dann kann das Solubilisat abgefüllt werden.

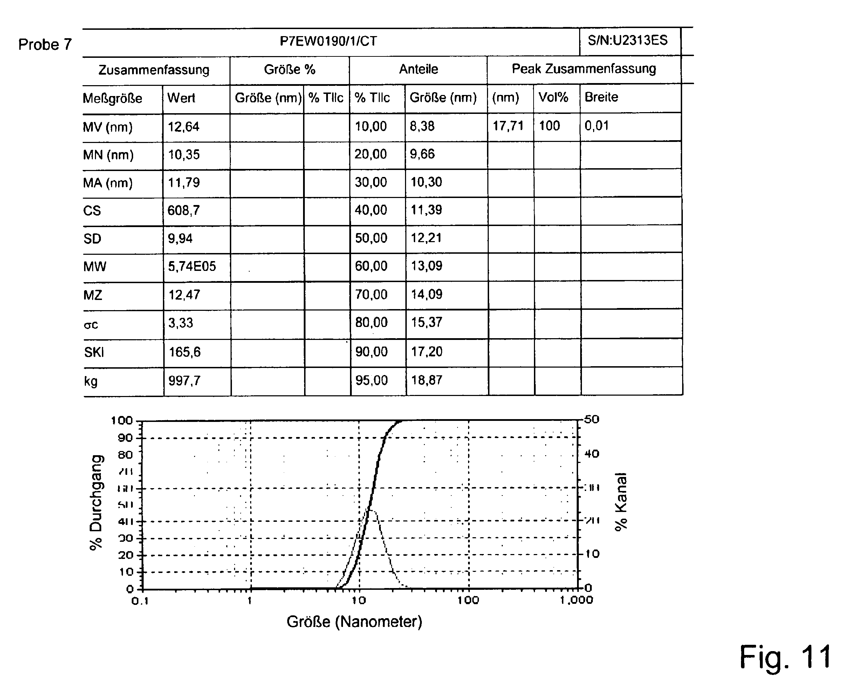

Das Solubilisat enthält 1,2 Gew.-% reines Chlorophyll und ist dunkelgrün/oliv und zähflüssig. Die Daten der Partikelgrößenverteilung des Solubilisats sind in Figur 11 dargestellt. In den Figuren 3 und 4 ist die Anzahlsummen- und Anzahldichteverteilung des Solubilisats der Probe 7 im Vergleich zu den Verteilungen der anderen Proben dargestellt.

### 8. Solubilisat mit Lutein als Farbstoff

Zur Herstellung der Probe 8 wurde folgende Rezeptur verwendet:
- 122: g Lutein 20 % FS, (DSM) Brenntag (AGT-Material-Nr. 10430/114)
- 18 g: mittelkettige Triglyceride: Pantex MCT oil, InCoPa oder Delios VK, Cognis (AGT-Material-Nr. 10460/102 bzw. 10460/016)
- 760 g: Polysorbat 80 Crillet 4, CRODA (AGT-Material-Nr. 10530/111)
- 30 g: Ascorbinsäure, BASF (AGT-Material-Nr. 10710/005)
- 30 g: Aqua dest. (AGT-Material-Nr. 10180)
- 30 g: mittelkettige Triglyceride: Pantex MCT oil, InCoPa oder Delios VK, Cognis (AGT-Material-Nr. 10460/102 bzw. 10460/016)
- 10 g: Mischtocopherol Decanox MTS 70-IP, ADM/Parmentier (AGT-Material-Nr. 10727/001)

Polysorbat und 18 g MCT-Öl wurden gemischt und auf eine Temperatur von 87 ± 2 °C erhitzt. Lutein wurde erwärmt und das Poysorbat/MCT-Öl-Gemisch zugegeben, diese Mischung wurde unter Rühren homogenisiert und dabei weiter auf 140 ± 2 °C erhitzt. Anschließend erfolgte eine Abkühlung auf 60 ± 2 °C. In einem zweiten Gefäß wurde Wasser, Ascorbinsäure, MCT-Öl und Mischtocopherol vermischt und unter Rühren erwärmt auf 64 ± 1 °C. Dann wurde das Apocarotenal-haltige Gemisch zu dem Ascorbinsäure/Mischtocopherol-haltigen Gemisch gegeben. Die gesamte Mischung wurde homogenisiert und nochmals erhitzt auf eine Temperatur von 85 ± 1 °C. Es erfolgte anschließend ein Abkühlen auf eine Temperatur unterhalb von 50 °C. Dann kann das Solubilisat abgefüllt werden.

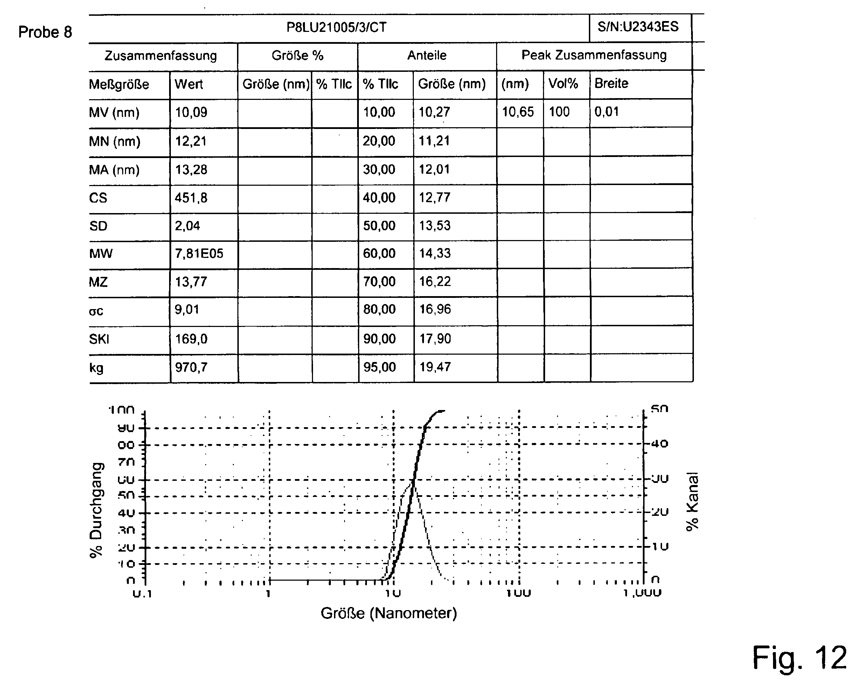

Das Solubilisat enthält 2 Gew.-% reines Lutein und ist intensiv dunkerot bis schwarz und zähflüssig. Die Daten der Partikelgrößenverteilung des Solubilisats sind in Figur 12 dargestellt. In den Figuren 3 und 4 ist die Anzahlsummen- und Anzahldichteverteilung des Solubilisats der Probe 8 im Vergleich zu den Verteilungen der anderen Proben dargestellt.

Wie bereits oben beschrieben wurde, ist die Erfindung nicht auf die Verwendung von Wasser im Solubilisat angewiesen. Zur Herstellung von wasserfreien Solubilisaten kann in einfacher Weise analog zu den oben genannten Ausführungsbeispielen vorgegangen werden mit folgenden Maßgaben. Es wird auf den Einsatz eines wasserlöslichen Antioxidationsmittels verzichtet und statt dessen der Anteil der fettlöslichen Antioxidationsmittel erhöht. Gegebenenfalls wird auch der Anteil des Emulgators erhöht. Im folgenden sein diese Vorgehensweise am Beispiel eines Apocarotenal-Solubilisats demonstriert.

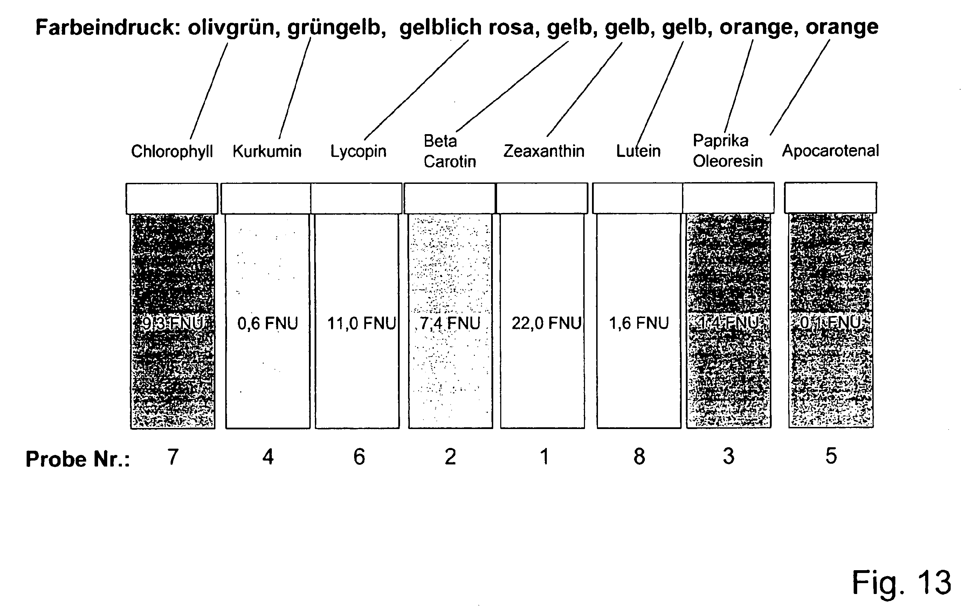

In Figur 13 eine fotografische Aufnahme der Solubilisate aus den Proben 1 bis 8 in einer Verdünnung von 1:1000 mit Wasser gezeigt. Die Proben sind von links nach rechts entsprechend einem Farbverlauf von Grün über Gelb nach Orange angeordnet. Angegeben sind zudem die Trübungsmesswerte für jede Probe. Der höchste gemessene Wert für die Trübung beträgt 22,0 FNU, was bereits ein äußerst niedriger Wert ist. Dies bestätigt den für das menschliche Auge optischen Eindruck kristallklarer Lösungen.

Durch Mischen der Proben miteinander lassen sich beliebige Farbtöne zwischen den Farbtönen der einzelnen Solubilisate erzeugen. Bei einem solchen Mischvorgang gemäß der Erfindung kann neben dem Mengenverhältnis der eingesetzten Solubilisate auch deren jeweilige Konzentration variiert werden, um den gewünschten Farbton zu erzielen.

Die folgenden Aussagen beziehen sich auf im Verhältnis 1:1000 mit Wasser verdünnte Solubilisate. Eine Mischung von gleichen Teilen Curcumin- und Chlorophyll-Solubilisat hat einen Farbton zwischen den Farbtönen des Chlorophyll-Solubilisats und des Curcumin-Solubilisats. Zwischen dem Farbton des dem Curcumin in Richtung auf das Apocarotenal folgenden Zeaxanthin- und dem Farbton des Apocarotenal-Solubilisats liegen die Farbtöne der folgenden Mischungen. Eine Mischung von gleichen Teilen des Paprika-Oleoresin und Curcumin hat einen Farbton etwas mehr ins Rote gehend als das Zeaxanthin-Solubilisat, gefolgt von dem Farbton einer Mischung aus gleichen Teilen aller genannter acht Solubilisate, dann einer Mischung aus einem Teil Apocarotenal und fünf Teilen Chlorophyll und schließlich einer Mischung aus gleichen Teilen Curcumin und Apocarotenal.

Es ist dem Fachmann ersichtlich, dass die Merkmale der einzelnen Ausführungsbeispiele auch miteinander kombiniert oder gegeneinander ausgetauscht werden können.

## Patentansprüche

1. Solubilisat, welches
zumindest einen natürlichen Farbstoff, welcher in Wasser nicht oder nur schwer löslich ist,
zumindest einen Emulgator mit einem HLB-Wert zwischen 8 und 19 mit einem Emulgatoranteil, welcher im Bereich von 65 Gew.-% bis 90 Gew.-%, bevorzugt im Bereich von 69 Gew.-% bis 85 Gew.-% liegt, und
zumindest ein wasserlösliches Antioxidationsmittel und zumindest ein fettlösliches Antioxidationsmittel enthält, wobei
der Farbstoff und die Antioxidationsmittel gemeinsam in Micellen eingeschlossen vorliegen.

2. Solubilisat nach Anspruch 1, wobei
Ascorbinsäure und/oder BHT und/oder BHA und/oder TBHQ das wasserlösliche Antioxidationsmittel und wobei
zumindest ein Tocopherol und/oder Carnolsäure das fettlösliche Antioxidationsmittel bildet.

3. Solubilisat nach Anspruch 2,
mit α-Tocopherol und/oder β-Tocopherol und/oder γ-Tocopherol und/oder δ-Tocopherol oder
mit einem Mischtocopherol aus α-Tocopherol, β-Tocopherol, γ-Tocopherol und δ-Tocopherol als Tocopherol.

4. Solubilisat nach einem der vorangegangenen Ansprüche,
welches mit Wasser zu einer zumindest für das menschliche Auge transparenten Flüssigkeit verdünnbar ist.

5. Solubilisat nach einem der vorangegangenen Ansprüche, wobei
der Farbstoffanteil unterhalb von 20 Gew.-%, bevorzugt im Bereich von 3 Gew.-% bis 18 Gew.-% liegt.

6. Solubilisat nach einem der vorangegangenen Ansprüche, wobei
der Anteil des wasserlöslichen Antioxidationsmittels unterhalb von 10 Gew.-%, bevorzugt im Bereich von 2 Gew.-% bis 5 Gew.-% liegt und besonders bevorzugt 3 Gew.-% beträgt.

7. Solubilisat nach einem der vorangegangenen Ansprüche, wobei
der Anteil des fettlöslichen Antioxidationsmittels unterhalb von 5 Gew.-%, bevorzugt unterhalb von 3 Gew.-% liegt und besonders bevorzugt 1 Gew.-% beträgt.

8. Solubilisat nach einem der vorangegangenen Ansprüche,
welches aus zumindest einem natürlichen Farbstoff, welcher in Wasser nicht oder nur schwer löslich ist,
zumindest einem Emulgator mit einem HLB-Wert zwischen 8 und 19 und
zumindest zwei Antioxidationsmitteln, von denen eines wasserlöslich und das andere fettlöslich ist, und Wasser besteht.

9. Solubilisat nach einem der vorangegangenen Ansprüche,
welches zumindest einen weiteren fettlöslichen Hilfsstoff enthält, insbesondere zumindest ein mittelkettiges Triglycerid (medium chain triglyceride, MCT) oder eine Mischung aus mittelkettigen Triglyceriden.

10. Solubilisat nach Anspruch 9,
welches aus zumindest einem natürlichen Farbstoff, welcher in Wasser nicht oder nur schwer löslich ist,
zumindest einem Emulgator mit einem HLB-Wert zwischen 8 und 19 und
zumindest zwei Antioxidationsmitteln, von denen eines wasserlöslich und das andere fettlöslich ist,
Wasser und
zumindest einem weiteren fettlöslichen Hilfsstoff, insbesondere einem mittelkettigen Triglycerid (medium chain triglyceride, MCT) oder einer Mischung aus mittelkettigen Triglyceriden, besteht.

11. Solubilisat nach einem der vorangegangenen Ansprüche,
bei welchem die Micellen einen Durchmesser im Bereich zwischen 4 nm und 30 nm, bevorzugt im Bereich zwischen 6 nm und 20 nm haben, gemessen nach dem Prinzip der dynamischen Lichtstreuung in 180° Rückstreuanordung mit Laserlicht der Wellenlänge 780 nm.

12. Solubilisat nach einem der vorangegangenen Ansprüche,
dessen Trübung kleiner als 30 FNU, bevorzugt kleiner als 20 FNU ist und besonders bevorzugt im Bereich zwischen 0,5 FNU und 2 FNU liegt, gemessen durch Streulichtmessung mit Infrarotlicht nach den Vorschriften der Norm ISO 7027 bei einer Verdünnung des Solubilisats im Verhältnis 1:1000 in Wasser.

13. Verfahren zum Herstellen eines Solubilisats nach einem der Ansprüche 1 bis 12 mit folgenden Schritten
a) Herstellen einer ersten Mischung aus zumindest einem natürlichen Farbstoff, welcher in Wasser nicht oder nur schwer löslich ist, und zumindest einen Emulgator mit einem HLB-Wert zwischen 8 und 19
b) Erwärmen der ersten Mischung auf eine Temperatur im Bereich zwischen 80°C und 150°C, wobei die Temperatur angepaßt an die Eigenschaften des Farbstoffs eingestellt wird,
c) Abkühlen der ersten Mischung auf eine Temperatur im Bereich von 50°C bis 70°C, bevorzugt im Bereich von 58°C bis 62°C,
d) Herstellen einer zweiten Mischung aus Wasser und Antioxidantien
e) Erwärmen der zweiten Mischung auf eine Temperatur im Bereich zwischen 60°C und 70°C, bevorzugt im Bereich zwischen 63°C und 65°C,
f) Vereinigen der ersten Mischung und der zweiten Mischung unter Homogenisieren und Erwärmen auf eine Temperatur im Bereich von 80°C bis 90°C, bevorzugt im Bereich zwischen 84°C und 86°C unter Bildung des Solubilisats, in welchem der Farbstoff und die Antioxidationsmittel gemeinsam in Micellen eingeschlossen vorliegen,
g) Abkühlen des Solubilisats auf eine Temperatur unterhalb von 50°C.

14. Verfahren nach Anspruch 13,
wobei in Schritt a) beim Herstellen der ersten Mischung zusätzlich zu dem Farbstoff und dem Emulgator zumindest ein fettlöslicher Hilfsstoff, beispielsweise ein mittelkettiges Triglycerid oder eine Mischung mittelkettiger Triglyceride verwendet wird.

15. Verfahren nach Anspruch 14, wobei Schritt a) folgendermaßen durchgeführt wird:
a1) Mischen des fettlöslicher Hilfsstoffs, beispielsweise ein mittelkettiges Triglycerid oder eine Mischung mittelkettiger Triglyceride,
a2) Erwärmen der Mischung aus Emulgator und fettlöslichem Hilfsstoff auf eine Temperatur im Bereich zwischen 60°C und 95°C,
a3) Vereinigen des Farbstoffs mit der Mischung aus Emulgator und fettlöslichem Hilfsstoff.

16. Verfahren nach Anspruch 14,
wobei Schritt a) folgendermaßen durchgeführt wird:
a11) Mischen des Farbstoffs mit zumindest einem fettlöslichen Hilfsstoff, beispielsweise einem mittelkettiges Triglycerid oder einer Mischung mittelkettiger Triglyceride,
a22) Erwärmen der Mischung aus Farbstoff und fettlöslichen Hilfsstoff auf eine Temperatur im Bereich zwischen 55°C und 85°C, wobei die Temperatur angepaßt an die Eigenschaften des Farbstoffs eingestellt wird,
a33) Vereinigen des Emulgators mit der Mischung aus Farbstoff und fettlöslichem Hilfsstoff.

17. Verfahren nach einem der Ansprüche 13 bis 16,
wobei in Schritt d) beim Herstellen der zweiten Mischung zusätzlich zu Wasser und den Antioxidantien zumindest ein fettlöslicher Hilfsstoff, beispielsweise ein mittelkettiges Triglycerid oder eine Mischung mittelkettiger Triglyceride verwendet wird.

18. Verwendung des Solubilisats nach einem der Ansprüche 1 bis 12 als Zusatz zu Lebensmitteln, insbesondere zu Getränken, Kosmetika oder Pharmazeutika.

19. Lebensmittel, insbesondere Getränk, enthaltend ein Solubilisat nach einem der Ansprüche 1 bis 12.

20. Kosmetisches Produkt enthaltend ein Solubilisat nach einem der Ansprüche 1 bis 12.

21. Pharmazeutisches Produkt enthaltend ein Solubilisat nach einem der Ansprüche 1 bis 12.

## Claims

1. A solubilizate containing:
at least a natural dye that is insoluble or sparingly soluble in water,
at least an emulslfler having an HLB value of 8 to 19 with an emulsifier proportion which is in the range of 65% by weight to 90% by weight, preferably is In the range of 69% by weight to 85% by weight, and
at least at least one water-soluble antioxidant and at least one fat-soluble antioxidant,
wherein the dye and the antioxidants are present enclosed together in micelles.

2. The solublilzate according to claim 1, wherein ascorbic acid and/or BHT and/or BHA and/or TBHQ form(s) the water-soluble antioxidant and
wherein at least one tocopherol and/or carnolic acid form the fat-soluble antioxidant.

3. The solubilizate according to claim 2, containing α-tocopherol and/or β-tocopherol and/or γ-tocopherol and/or δ-tocopherol, or
containing a mixed tocopherol composed of α-tocopherol, β-tocopherol, γ-tocopherol, and δ-tocopherol
as tocopherol.

4. The solubilizate according to one of the preceding claims, which is dilutable with water to form a liquid that is transparent to the human eye.

5. The solubilizate according to one of the preceding claims, wherein the dye proportion is less than 20% by weight, preferably is in the range of 3% by weight to 18% by weight.

6. The solubilizate according to one of the preceding claims, wherein the proportion of the water-soluble antioxidant is less than 10% by weight, preferably is in the range of 2% by weight to 5% by weight and in particular preferably is 3% by weight.

7. The solubilizate according to one of the preceding claims, wherein the proportion of the fat-soluble antioxidant is less than 5% by weight, preferably is less than 3% by weight and In particular preferably is 1% by weight.

8. The solubilizate according to one of the preceding claims, composed of:
at least one natural dye that is insoluble or sparingly soluble in water,
at least one emulsifier having an HLB value of 8 to 19, and
at least two antioxidants, of which one is water-soluble and the other is fat-soluble,
and water.

9. The solubilizate according to one of the preceding claims, containing at least one further fat-soluble adjuvant, in particular at least one medium chain triglyceride (MCT) or a mixture of medium chain triglycerides.

10. The solubilizate according to claim 9, composed of:
at least one natural dye that is insoluble or sparingly soluble in water,
at least one emulsifier having an HLB value of 8 to 19, and
at least two antioxidants, of which one is water-soluble and the other is fat-soluble,
water, and
at least one further fat-soluble adjuvant, in particular a medium chain triglyceride (MCT) or a mixture of medium chain triglycerides.

11. The solubillzate according to one of the preceding claims, wherein the micelles have a diameter in the range of 4 nm to 30 nm, preferably in the range of 6 nm and 20 nm, measured according to the principle of dynamic light scattering in a 180° backscatter system, using laser light having a wavelength of 780 nm.

12. The solubilizate according to one of the preceding claims, the turbidity of which is less than 30 FNU, preferably is less than 20 FNU and in particular is In the range of 0,5 FNU and 2 FNU, determined by scattered light measurement using infrared light according to the specifications of the ISO 7027 standard, at a 1:1000 dilution of the solubilizate in water.

13. A method for preparing a solubilizate according to claims 1 to 12, comprising the following steps:
a) preparing a first mixture of at least one natural dye that is insoluble or sparingly soluble in water, and at least one emulsifier having an HLB value of 8 to 19,
b) heating the first mixture to a temperature in the range of 80°C to 150°C, the temperature being adjusted corresponding to the characteristics of the dye,
c) cooling the first mixture to a temperature In the range of 50°C to 70°C, preferably In the range of 58°C and 62°C,
d) preparing a second mixture of water and antioxidants,
e) heating the second mixture to a temperature in the range of 60°C to 70°C, preferably in the range of 63°C and 65°C.,
f) combining the first mixture and the second mixture, with homogenization, and heating to a temperature In the range of 80°C to 90°C, preferably in the range of 84°C to 86°C, to form the solubilizate, In which the dye and the antioxidants are present enclosed together in micelles, and
g) cooling the solubilizate to a temperature below 50°C.

14. The method according to claim 13,
wherein for preparing the first mixture, in addition to the dye and the emulsifier at least one fat-soluble adjuvant, for example a medium chain triglyceride or a mixture of medium chain triglycerides, is used in step a).

15. The method according to claim 14,
wherein step a) is carried out as follows:
a1) mixing the fat-soluble adjuvant, for example a medium chain triglyceride or a mixture of medium chain trlglycerides,
a2) heating the mixture of emulsifier and fat-soluble adjuvant to a temperature In the range of 60°C to 95°C, and
a3) combining the dye with the mixture of emulsifier and fat-soluble adjuvant.

16. The method according to claim 14,
wherein step a) is carried out as follows:
a11) mixing the dye with at least one fat-soluble adjuvant, for example a medium chain triglyceride or a mixture of medium chain triglycerides,
a22) heating the mixture of dye and fat-soluble adjuvant to a temperature In the range of 55°C to 85°C, the temperature being adjusted according to the characteristics of the dye, and
a33) combining the emulsifier with the mixture of dye and fat-soluble adjuvant.

17. The method according to one of claims 13 to 16,
wherein for preparing the second mixture, in addition to water and the antioxidants at least one fat-soluble adjuvant, for example a medium chain Triglyceride or a mixture of medium chain triglycerides, is used in step d).

18. A method comprising:
utilizing the solubilizate according to one of claims 1 to 12 as an additive in foods, in particular in beverages, cosmetics or pharmaceuticals.

19. Food, in particular beverage, containing a solubilizate according to one of claims 1 to 12.

20. Cosmetic product containing a solubilizate according to one of claims 1 to 12.

21. Pharmaceutical product containing a solubilizate according to one of claims 1 to 12.

## Revendications

1. Solubilisat, comprenant :
au moins un colorant naturel qui n'est pas soluble ou est difficilement soluble dans l'eau,
au moins un émulsifiant ayant une valeur HLB située entre 8 et 19 avec une proportion d'émulsifiant qui est dans la plage de 65 % en poids à 90 % en poids, de préférence dans la plage de 69 % en poids à 85 % en poids, et
au moins un agent antioxydant hydrosoluble et au moins un agent antioxydant liposoluble,
le colorant et les agents antioxydants se présentant conjointement incorporés dans des micelles .

2. Solubilisat selon la revendication 1, dans lequel :
l'acide ascorbique et/ou le BHT et/ou le BHA et/ou la TBHQ constitue l'agent antioxydant hydrosoluble et
au moins un tocophérol et/ou un acide carnosique constitue l'agent antioxydant liposoluble.

3. Solubilisat selon la revendication 2,
comprenant de l'α-tocophérol et/ou du β-tocophérol et/ou du γ-tocophérol et/ou du δ-tocophérol ou
comprenant un mélange de tocophérol constitué d'α-tocophérol, de β-tocophérol, de γ-tocophérol et de δ-tocophérol à titre de tocophérol.

4. Solubilisat selon l'une des revendications précédentes, qui peut être dilué avec de l'eau pour donner un liquide au moins transparent à l'oeil humain.

5. Solubilisat selon l'une des revendications précédentes, dans lequel la proportion de colorant se situe en dessous de 20 % en poids, de préférence dans la plage allant de 3 % en poids à 18 % en poids.

6. Solubilisat selon l'une des revendications précédentes, dans lequel la proportion de l'agent antioxydant hydrosoluble se situe en dessous de 10 % en poids, de préférence dans la plage de 2 % en poids à 5 % en poids et est particulièrement préférentiellement de 3 % en poids.

7. Solubilisat selon l'une des revendications précédentes, dans lequel la proportion de l'agent antioxydant liposoluble se situe en dessous de 5 % en poids, de préférence en dessous de 3 % en poids et est particulièrement préférentiellement de 1 % en poids.

8. Solubilisat selon l'une des revendications précédentes,
qui se compose d'au moins un colorant naturel, qui n'est pas soluble ou est difficilement soluble dans l'eau,
d'au moins un émulsifiant ayant une valeur HLB située entre 8 et 19, et
d'au moins deux agents antioxydants dont l'un est hydrosoluble et l'autre est liposoluble, et d'eau.

9. Solubilisat selon l'une des revendications précédentes, qui comprend au moins un autre auxiliaire liposoluble, notamment au moins un triglycéride à chaîne moyenne (medium chain triglyceride, MCT) ou un mélange de triglycérides à chaîne moyenne.

10. Solubilisat selon la revendication 9,
qui se compose d'au moins un colorant naturel, qui n'est pas soluble ou est difficilement soluble dans l'eau,
d'au moins un émulsifiant ayant une valeur HLB située entre 8 et 19, et
d'au moins deux agents antioxydants dont l'un est hydrosoluble et l'autre est liposoluble,
d'eau, et
d'au moins un autre auxiliaire liposoluble, notamment au moins un triglycéride à chaîne moyenne (medium chain triglycéride, MCT) ou un mélange de triglycérides à chaîne moyenne.

11. Solubilisat selon l'une des revendications précédentes, dans lequel les micelles ont un diamètre dans la plage située entre 4 nm et 30 nm, de préférence dans la plage située entre 6 nm et 20 nm, mesuré selon le principe de la diffusion dynamique de la lumière dans une disposition de rétrodiffusion de 180° avec une lumière laser de longueur d'ondes 780 nm.

12. Solubilisat selon l'une des revendications précédentes, dont la turbidité est inférieure à 30 FNU, de préférence inférieure à 20 FNU et particulièrement préférentiellement dans la plage située entre 0,5 FNU et 2 FNU, mesurée par mesure de la lumière dispersée avec une lumière infrarouge d'après les instructions de la norme ISO 7027 à une dilution du solubilisat située en un rapport de 1/1000 dans de l'eau.

13. Procédé de production d'un solubilisat selon l'une des revendications 1 à 12, comprenant les étapes suivantes consistant à :
a) préparer un premier mélange constitué d'au moins un colorant naturel, qui n'est pas soluble ou est difficilement soluble dans l'eau, et d'au moins un émulsifiant ayant une valeur HLB située entre 8 et 19,
b) chauffer le premier mélange à une température dans la plage située entre 80°C et 150°C, la température étant réglée de manière adaptée aux propriétés du colorant,
c) refroidir le premier mélange à une température dans la plage allant de 50°C à 70°C, de préférence dans la plage de 58°C à 62°C,
d) préparer un deuxième mélange d'eau et d'antioxydants,
e) chauffer le deuxième mélange à une température dans la plage située entre 60°C et 70°C, de préférence dans la plage située entre 63°C à 65°C,
f) réunir le premier mélange et le deuxième mélange sous homogénisation et chauffage à une température dans la plage allant de 80°C à 90°C, de préférence dans la plage située entre 84°C à 86°C, en formant le solubilisat, dans lequel le colorant et les agents antioxydants se présentent conjointement incorporés dans des micelles,
g) refroidir le solubilisat à une température inférieure à 50°C.

14. Procédé selon la revendication 13, dans lequel, à l'étape a) pour la préparation du premier mélange, on utilise en plus du colorant et de l'émulsifiant au moins un auxiliaire liposoluble, par exemple un triglycéride à chaîne moyenne ou un mélange de triglycérides à chaîne moyenne.

15. Procédé selon la revendication 14, dans lequel, à l'étape a), on procède comme suit :
a1) mélange de l'auxiliaire liposoluble, par exemple un triglycéride à chaîne moyenne ou un mélange de triglycérides à chaîne moyenne,
a2) chauffage du mélange constitué de l'émulsifiant et de l'auxiliaire liposoluble à une température dans la plage située entre 60°C et 95°C,
a3) réunion du colorant et du mélange constitué de l'émulsifiant et de l'auxiliaire liposoluble.

16. Procédé selon la revendication 14, dans lequel, à l'étape a), on procède comme suit :
a11) mélange du colorant avec au moins un auxiliaire liposoluble, par exemple un triglycéride à chaîne moyenne ou un mélange de triglycérides à chaine moyenne,
a22) chauffage du mélange constitué du colorant et de l'auxiliaire liposoluble à une température dans la plage située entre 55°C et 85°C, la température étant ajustée de manière adaptée aux propriétés du colorant,
a33) réunion de l'émulsifiant et du mélange constitué du colorant et de l'auxiliaire liposoluble.

17. Procédé selon l'une des revendications 13 à 16, dans lequel, à l'étape d) pour la préparation du deuxième mélange, en plus de l'eau et des antioxydants, au moins un auxiliaire liposoluble est utilisé, par exemple un triglycéride à chaîne moyenne ou un mélange de triglycérides à chaîne moyenne.

18. Utilisation du solubilisat selon l'une des revendications 1 à 12, comme additif pour des produits alimentaires, en particulier des boissons, des cosmétiques ou des produits pharmaceutiques.

19. Produit alimentaire, en particulier boisson, contenant un solubilisat selon l'une des revendications 1 à 12.

20. Produit cosmétique contenant un solubilisat selon l'une des revendications 1 à 12.

21. Produit pharmaceutique contenant un solubilisat selon l'une des revendications 1 à 12.
